(19) Europäisches Patentamt
European Patent Office
Office européen des brevets

(11) EP 2 820 069 B1

(12) # EUROPEAN PATENT SPECIFICATION

(45) Date of publication and mention of the grant of the patent:
**17.02.2016 Bulletin 2016/07**

(21) Application number: **13706959.7**

(22) Date of filing: **25.02.2013**

(51) Int Cl.:
***C08J 3/02*** *(2006.01)*
***C08J 3/07*** *(2006.01)*
***B82Y 30/00*** *(2011.01)*
***C01B 31/04*** *(2006.01)*
***C08K 3/04*** *(2006.01)*

(86) International application number:
**PCT/EP2013/053648**

(87) International publication number:
**WO 2013/127712 (06.09.2013 Gazette 2013/36)**

(54) **PROCESS FOR PRODUCING GRAPHENE-POLYMER NANOCOMPOSITES**

VERFAHREN ZUR HERSTELLUNG VON GRAPHEN-POLYMER-NANOVERBUNDSTOFFEN

PROCÉDÉ DE PRODUCTION DE NANOCOMPOSITES DE GRAPHÈNE-POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2012 EP 12157175**

(43) Date of publication of application:
**07.01.2015 Bulletin 2015/02**

(73) Proprietor: **Solvay SA**
**1120 Bruxelles (BE)**

(72) Inventors:
- **GAUTHY, Fernand**
  **B-1780 Wemmel (BE)**
- **SANGUINETI, Aldo**
  **I-20133 Milano (IT)**
- **D'APRILE, Fiorenza**
  **I-20054 Nova Milanese, Milano (IT)**
- **D'ORAZIO, Patrizia**
  **B-7140 Morlanwelz (BE)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
**EP-A1- 2 395 043** **US-A1- 2011 260 116**

- **JIN SIL KIM ET AL: "Electrical properties of graphene/SBR nanocomposite prepared by latex heterocoagulation process at room temperature", JOURNAL OF INDUSTRIAL AND ENGINEERING CHEMISTRY, THE KOREAN SOCIETY OF INDUSTRIAL AND ENGINEERING CHEMISTRY, KOREA, vol. 17, no. 2, 31 August 2010 (2010-08-31), pages 325-330, XP028350146, ISSN: 1226-086X, DOI: 10.1016/J.JIEC.2011.02.034 [retrieved on 2011-03-02]**
- **THANH TRUONG DANG ET AL: "Preparation of poly(vinyl chloride)-solvothermally reduced graphene composite by latex tecnology", STRATEGIC TECHNOLOGY (IFOST), 2010 INTERNATIONAL FORUM ON, IEEE, PISCATAWAY, NJ, USA, 13 October 2010 (2010-10-13), pages 385-386, XP031835552, DOI: 10.1109/IFOST.2010.5667932 ISBN: 978-1-4244-9038-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 820 069 B1

## Description

### Cross-reference to related application

The present application claims priority to European application No. 12157175.6 filed on February 27, 2012, the whole content of this application being incorporated herein by reference. Should the disclosure of any patents, patent applications, and publications which are incorporated herein by reference conflict with the description of the present application to the extent that it may render a term unclear, the present description shall take precedence.

### Technical Field

The present invention relates generally to the field of nanoparticle-filled polymer composites, more particularly to a process for producing graphene filled polymer nanocomposites.

### Background Art

Fillers for polymers may be inert materials that are incorporated to reduce resin cost and improve the processability or other properties of the base polymer. Over the past decade, there has been a growing interest in the development of nanoparticle-filled polymer composites, which were found to have superior mechanical, thermal, and/or conductive properties compared to the base polymer and therefore adapted for a wide range of industrial uses. Moreover, some of these polymer-filler composites were also used for certain sealant parts or fluid lines, due to the good barrier properties imparted by the nanoparticle fillers.

Different nanoparticle fillers, due to its own particular properties, will affect different properties of the base polymer. For instance, carbon black fillers are widely used in the negative electrode materials to enhance their conductivity property, and nanoclay-filled polymer composites generally provide an improved resistance to flammability.

In this regard, as reported in documents US 2010/0096595 and US 2010/0096597 (both assigned to The Trustees of Princeton University), graphene sheets (thin layers with a 2-dimensional nanostructure of carbon atoms) can be incorporated into a polymer matrix to form a graphene-filled polymer composite with exceptional gas barrier properties. According to US 2010/0096595 and US 2010/0096597, said graphene-filled polymer composite was prepared by mixing functional graphene sheets (FGS) within the polymer matrix using one of the three methods: a) extrusion process at an elevated temperature; b) solution mixing: separately disperse FGS and polymer in a polar organic solvent (e.g. tetrahydrofuran), combine the two organic solutions, and leave the mixture to the open air for solvent evaporation; and c) solution shear mixing for making FGS/PDMS (polydimethylsiloxane) composites.

Document US 2011/0114189 (VORBECK MATERIALS CORP.) 19.05.2011 discloses a FGS-polymer composite material which, due to its superior fuel permeation resistance and other mechanical properties, meets the requirements of many fuel system components. According to US 2011/0114189, said FGS-polymer composite is made by any suitable melt-mixing method, such as using a single or twin-screw extrude, a blender, a kneader, or a Banbury mixer.

Nevertheless, several problems remain in the existing processes for making desired graphene-polymer nanocomposites. In particular, the traditional heat-melt extrusion technique to mix graphene and polymer as suggested in the above-cited documents is inapplicable to heat-sensitive materials, and is known to require a high energy input.

Moreover, the aforementioned solvent mixing method produces each graphene-polymer nanocomposite using a substantial amount of organic solvent, which is later evaporated to the atmosphere and therefore not environmental friendly. As for the solution shear mixing technique described earlier, although it is generally considered a more suitable approach than extrusion and solution mixing technique for processing highly viscous filler-polymer mixture, it faces a challenge in generating a product with a satisfactory particle-size distribution in a cost-effective manner.

Another noted limitation of the afore-discussed mixing processes is that, while these processes normally start with a mixture where graphene fillers are sufficiently scattered in the base polymer, graphene coalescence tends to occur in a later processing stage which involves solvent drying or heat melting. Solvent mixing or heat-melt extrusion mixing also do not orient the FGS platelets within the mixture, as noted in documents US 2010/0096595 and US 2010/0096597. Consequently, the products of the afore-discussed processes are not "true" nanocomposites with advantageous properties expected for a nanoscale material, nor materials with exceptional barrier properties - which are characteristic properties of composites having well-dispersed fillers in the base polymer.

Therefore, there remains a need to develop an environmental friendly technique for producing "true" nanocomposites of various graphene-filled polymers, without using an organic solvent or relying on heat-melt extrusion to mix polymer and graphene.

**Summary of invention**

The Applicant has surprisingly found that, through an aqueous colloidal suspension route, graphene-filled polymer (GFP) nanocomposites can be produced without using an organic solvent or heat-melt extrusion for dispersing graphene into the base polymer.

Specifically, the present invention resides in a process for producing a composition comprising graphene and at least one polymer, the process comprising the steps of: (i) providing an aqueous suspension of graphene [dispersion (G)]; (ii) mixing the dispersion (G) with an aqueous polymer latex to obtain a liquid mixture [mixture (M)]; and (iii) co-coagulating the mixture (M) to obtain said composition, wherein the polymer is a fluoropolymer which comprises recurring units derived from at least one fluorinated monomer. The expression "aqueous" in the context of the present invention means dispersed or dissolved in water. The "aqueous suspension" in the context of the present invention refers to a suspension in which water is the major liquid component, or a suspension in which water is the only liquid component.

The Applicant has found that, using the process of the present invention, it is possible to obtain GFP nanocomposites where graphene fillers are advantageously well dispersed in the base polymer. Moreover, films made from the graphene-filled polymer nanocomposite product of the present invention have advantageously shown excellent barrier properties, in the base polymer.

This novel process of the present invention for producing GFP nanocomposites is not limited to the application for heat-insensitive polymers, does not require a subsequent grinding step, and is therefore more efficient and energy-saving compared to the traditional heat melt extrusion technique. Moreover, compared to the solvent mixing process, the aqueous mixing process of the present invention does not use toxic or otherwise polluting organic solvent(s) and is therefore more environmental friendly. Additionally, as a further advantage, the process of the present invention noticeably minimizes the coalescence of graphene like fillers in the final composite by avoiding heat melt extrusion and solvent evaporation, and therefore could provide GFP composite materials with superior barrier properties.

For the purpose of the present invention, the term "graphene" is used to encompass both pristine, non-oxidized graphene and its oxidized form, and the term "graphene oxide" is intended to denote the oxidized graphene of which the oxygen content ranges from 1 % to 90% by weight. The graphene used for the present invention can be produced by the reduction of delaminated graphite oxide by chemical methods, thermal methods, and ultraviolet-assisted methods. Graphite oxide is a layered material which can be prepared by oxidizing graphite in the presence of strong acids and oxidants. The graphene derived sheets in graphite oxide thus prepared are largely oxidized and bear a large number of hydroxyl and epoxide functional groups on the basal planes, which are strongly hydrophilic. The level of oxidation in the graphene derived sheets in graphite oxide can be varied based on the reaction condition, the oxidization method, and the precursor graphite used.

According to a preferred embodiment, the process of the invention comprises a step (i) of providing an aqueous suspension of graphene [dispersion (G)], wherein the graphene is graphene oxide. The graphene oxide used in the present process invention typically has an oxygen content of between 1% and 90% by weight, preferably between 10% and 80% by weight, more preferably between 30% and 60% by weight, and most preferably between 45% to 55% by weight. In a preferred embodiment of the present invention, the graphene oxide used has a hydrogen content of 0.1 % to 50% by weight, preferably 1 % to 10% by weight, and more preferably 2% to 4% by weight.

Any method known in the art can be followed in step (i) for providing the aqueous suspension of graphene [dispersion (G)], wherein the graphene is graphene oxide. According to a first embodiment of the present invention, step (i) comprises dispersing a graphene oxide in an aqueous medium. For example, step (i) may be carried out by directly dispersing graphene oxide powder in water by mechanical means, such as under stirring or sonication. The graphene oxide powder can be directly obtained from a commercial source or produced in a laboratory by conventional technologies known in the art.

According to a second embodiment of the present invention, step (i) comprises subjecting an aqueous suspension of graphite oxide to sonication or, alternatively, stirring the graphite/oxide mixture in the aqueous suspension of graphite oxide, to obtain an aqueous suspension of graphene oxide. The purpose of the sonication or stirring treatment in step (i) of the aforementioned second embodiment is to at least partially exfoliate the graphite oxide in the aqueous medium. Therefore, the sonication or stirring treatment in step (i) of the aforementioned second embodiment can also be conveniently replaced by other exfoliation means known in the art, to obtain the aqueous suspension of graphene oxide.

For the purpose of the present invention, "exfoliation" of graphite oxide means delaminating graphite oxide into individual graphene oxide sheets. Graphite oxide can be obtained by oxidation of graphite salt, either with strong oxidizing agents or electrochemically, wherein the graphite salt can be nitrate salt or bisulfate salt. Examples of said strong oxidizing agents include potassium chlorate, permanganate, bichromate, chlorine dioxide, and combinations thereof; potassium permanganate is preferred. The graphite oxide used for the present invention typically has an oxygen content of at least 5% by weight, preferably has an oxygen content of at least 20% by weight, and more preferably has an oxygen content of at least 30% by weight. The graphite used for the present invention typically has an oxygen content of less than 2% by weight, preferably less than 1 % by weight.

A preferred method for providing the aqueous suspension of graphene oxide in step (i) includes the following steps:

(i-a) mixing graphite with a concentrated sulphuric acid;
(i-b) introducing at least one oxidizing agent to the mixture obtained in (i-a) to obtain over-oxygenated graphite salts;
(i-c) adding water to the over-oxygenated graphite salts in step (i-b) to obtain a first graphite oxide suspension [S1];
(i-d) removing metallic and non-metallic ions from the first graphite oxide suspension [S1] to obtain a second graphite oxide suspension [S2]; and
(i-e) subjecting the second graphite oxide suspension [S2] to sonication or, alternatively, stirring the graphite oxide/water mixture in the suspension [S2], to obtain the aqueous suspension of graphene oxide.

For the purpose of the present invention, the "concentrated sulphuric acid" denotes a water solution of $H_2SO_4$ having a concentration of at least 80 wt%, preferably ranging from 85 to 98 wt%, more preferably from 89 to 98 wt%, and most preferably from 95 to 98 wt%. The molar ratio between the sulphuric acid and graphite in step (i-a) typically ranges from 3 to 15, preferably from 4 to 10, and more preferable from 5 to 8. Step (i-a) is carried out either by adding the graphite to the concentrated sulphuric acid or, more preferably, by adding the concentrated sulphuric acid to the graphite. Typically, the mixing of graphite with sulphuric acid in step (i-a) is carried out by stirring or sonication, for a residence time ranging from 10 minutes to 24 hours, preferably from 30 minutes to 18 hours. Moreover, to remove the heat generated by the mixing process, step (i-a) is typically carried out in a reactor equipped with a cooling device, which is typically set to a temperature ranging from -20°C to 25°C. Preferably, the step (i-a) is carried out in a reactor equipped with at least one baffle, to avoid vortex generation during mixing.

In step (i-b), the oxidizing agents used can be selected from a group consisting of potassium chlorate, permanganate, bichromate, chlorine dioxide, and combinations thereof. In a preferred embodiment, the oxidizing agents used may be a combination of potassium permanganate and sodium nitrate, with the weight ratio of potassium permanganate to graphite used in step (i-a) typically ranging from 3.0 to 6.0, preferably 4.0 to 5.0, and more preferably 4.2 to 4.6, and the weight ratio of sodium nitrate to graphite used in step (i-a) typically ranging from 0.5 to 1.5, more preferably ranging from 0.6 to 1.2, and most preferably from 0.7 to 0.8. Moreover, the oxidizing agent is preferably introduced to the mixture obtained in (i-a) while maintaining vigorous agitation. The reaction temperature in step (i-b) is preferably controlled with the range of from 10° C to 50°C, more preferably from 20°C to 40°C, and most preferably from 20°C to 35°C, by means of an external cooling device and/or adjusting addition speed of the oxidizing agent. Preferably, the reaction in step (i-b) is carried out while being prevented from visible radiation. The residence time of step (i-b) is typically from 30 minutes to 48 hours, preferably from 7 hours to 24 hours, to obtain over-oxygenated graphite salts.

In step (i-c), the water added to the over-oxygenated graphite salts obtained in step (i-b) is preferably deionized water. Due to the exothermic nature of the water dilution process for the over-oxygenated graphite salts, the temperature of the reaction medium in step (i-c) is typically controlled under 80°C, preferably from 30°C to 70°C, more preferably from 40°C to 60°C, by means of an external cooling device and/or adjusting the water addition rate. Optionally, an amount of hydrogen peroxide is added to the water-diluted graphite oxide suspension [S1], prior to step (i-d), to reduce the residual permanganate and manganese dioxide to manganese sulphate in the suspension [S1], wherein the amount of hydrogen peroxide to the graphite used in step (i-a) typically ranges from 1.5:1 to 10:1 by weight. Also optionally, a neutralizing agent such as anhydrous sodium bicarbonate is added into the water-diluted graphite oxide suspension [S1], prior to step (i-d), to give a pH of 6.0-8.0, preferably 6.5-7.5, and more preferably 6.8-7.2 in the graphite oxide suspension [S1].

Optionally, steps (i-a) to (i-c) are advantageously carried out under an inert atmosphere, e.g. under a nitrogen atmosphere.

Step (i-d) can be conveniently carried out by dialysis, preferably dialysis with deionized water, to remove metallic and nonmetallic ions (including acid contaminant) with deionized water, so as to obtain a second graphite oxide suspension [S2].

The purpose of step (i-e) is to at least partly exfoliate graphite oxide in the suspension [S2]. Therefore, in operation, step (i-e) can be conveniently replaced by other exfoliation means known in the art, to obtain the aqueous suspension of graphene oxide.

According to another variant of the aforementioned embodiment, the aqueous suspension of graphene oxide provided in step (i) is manufactured via a method comprising the following steps:

(i-A) dispersing graphite oxide having an oxygen content between 5% and 30% in an aqueous solution of sulphuric acid having a concentration of $H_2\ SO_4$ between 10 wt% and 96wt%, by sonication, so as to obtain a first graphene oxide dispersion (D1) with a pH in the range of 2 to 5, preferably from 3 to 4.5;
(i-B) adding an amount of hydrogen peroxide to the first graphene oxide dispersion (D1), optionally under sonication, to provide a second dispersion (D2), wherein the weight ratio of graphite oxide dispersed in (i-A) to the amount of

hydrogen peroxide is between 1:10 and 1:50;

(i-C) adding to the second dispersion (D2) a soluble Fe (II) salt to give a third dispersion (D3), wherein the weight ratio of the Fe(II) salt added in (i-C) to the hydrogen peroxide added in (i-B) is between 1:10 and 1:100;

(i-D) optionally neutralizing said third dispersion (D3) with a base to reach a pH of 6.0-8.0, preferably 6.5-7.5, more preferably 6.8-7.2; and (i-E) removing Fe(III) and possibly other impurities to obtain an essentially iron free oxidized suspension of graphene oxide, preferably by dialysis.

In step (i-A), the graphite is preferably in the form of graphite nanoplatelets, and the graphite is preferably dispersed in the aqueous solution of sulphuric acid by sonication or mechanical stirring. Further, steps (i-A) to (i-D) are typically carried out in a reactor equipped with a cooling device, the cooling device advantageously setting a temperature between -10°C and 10°C in step (i-A). Moreover, in step (i-B), the soluble Fe (II) salt is typically added to the acid dispersion under stirring.

According to the second embodiment of the present invention, the aqueous suspension of graphene oxide obtained in step (i) may be further purified by centrifugation, to remove a small amount of aggregates that precipitate under the centrifugal force, so as to obtain a colloidal suspension of graphene oxide platelets from the remaining supernatant.

Step (ii) of the present process invention can be conveniently carried out by adding an aqueous polymer latex to the aqueous suspension of graphene [dispersion (G)] provided in step (i), under stirring, sonication, or other mixing means to obtain the liquid mixture [mixture (M)]. Preferably, the aqueous polymer latex is dropwise added to the dispersion (G) under stirring, to obtain the mixture (M). Alternatively, step (ii) may be carried out by adding the dispersion (G) to the aqueous polymer latex under stirring, sonication, or other mixing means to obtain the liquid mixture [mixture (M)]. Optionally, the dispersion (G) may be water diluted before mixing with the aqueous polymer latex, wherein the dilution rate may be 2 times to 100 times, preferably 5 times to 20 times, more preferably from 5 times to 10 times. Likewise, the aqueous polymer latex may be water diluted before mixing with the dispersion (G), wherein the dilution rate may be 2 times to 100 times, preferably 5 times to 20 times, more preferably from 5 times to 10 times.

The aqueous polymer latex and the dispersion (G) may be mixed in a container by mechanical stirring (e.g. using a magnet stirring bar) or sonication means. Preferably, the aqueous polymer latex and the dispersion (G) is mixed in a container by a magnet stirring bar of which the rotating speed is set between 100 rpm to 500 rpm, more preferably between 200 rpm to 400 rpm, most preferably between 250 rpm to 350 rpm, to produce a mild agitation in the mixture (M).

The residence time of step (ii) may be between 2 minutes and 60 minutes, preferably between 5 minutes and 30 minutes, more preferably between 10 minutes and 20 minutes.

In step (iii) of the present process invention, the mixture (M) may be co-coagulated by an addition of electrolyte, by an addition of water miscible solvents, by rapid stirring, or by freezing treatment to the mixture (M). In a preferred embodiment of the present invention, the mixture (M) is co-coagulated by an addition of electrolyte in the mixture (M), e.g., by an addition of a $HNO_3$--solution. The concentration of the $HNO_3$ solution may range from 20% to 65%, preferably from 30% to 65%, more preferably from 50% to 65%. The volume ratio of the $HNO_3$ solution to the mixture (M) is typically less than 1:200, preferably less than 1:500, more preferably less than 1:1000. In a preferred embodiment of the present invention, the mixture (M) is co-coagulated by dropwise addition of 65% $HNO_3$.

Optionally, the composition obtained in step (iii) is subsequently filtered to remove excess water. The objective of the co-coagulation step (iii) in the present process invention is to assemble graphene particles with polymer latex nanoparticles while achieving a good dispersion of graphene filler in the nanoscale composite.

The composition obtained in step (iii) of the present process invention may be rinsed by water and subsequently dried, e.g. by vacuum drying. The vacuum drying pressure may be 200 mbar or lower, preferably 150 mbar or lower; and more preferably 10 mbar or lower. The vacuum drying time can range from 30 minutes to 100 hours, preferably from 12 hours to 72 hours, and more preferably from 24 hours to 72 hours. The vacuum drying temperature can be at least 25°C, preferably at least 50°C, and more preferably at least 100°C. In operation, the vacuum drying temperature may be set as high as possible, to reduce the drying time, yet below the polymer melting point to keep the powder morphology of the graphene-polymer composite that is advantageous for the power coating application. The power morphology of the graphene-polymer composite produced from the present process invention is advantageous in that it saves the potentially difficult and expensive grinding treatment of polymer composites, especially in the cases of prefluorinated resin composites.

According to an exemplary embodiment of the present process invention, the graphene-polymer composition produced in step (iii) is water rinsed on a filter, and subsequently subjected to a first and second vacuum drying treatments each using a different vacuum pressure, drying temperature, and/or duration. The second vacuum drying treatment is intended to partly use graphene oxide in the filled polymer composite and also releases gases from the composite material to avoid foaming or bubble formation during the subsequent processing. In this exemplary embodiment of the present process invention, the composition produced in step (iii) may be water rinsed on a polytetrafluoroethylene (PTFE) filter having a pore size betwen 2μm and 10 μm, e.g., a 5 μm PTFE filter.

According to a preferred embodiment of the present process invention, step (i) comprises providing an aqueous suspension of graphene [dispersion (G)], wherein the graphene is graphene oxide, and the process further comprises a step of heating the composition obtained from step (iii), wherein the heating temperature is preferably above 250°C. The purpose of the heating step is to reduce oxygen content of graphene oxide in the composition, and in this way to restore the desired properties of graphene which are largely lost after oxidation.

Furthermore, the present process invention optionally comprises a step of melt processing the graphene-polymer composition to obtain a film, a coating, or a lining. The melt processing of the graphene-polymer composition can be performed using any conventional means known in the art, such as by compression moulding, injection moulding, sintering moulding, or by extrusion. In an exemplary embodiment of the present process invention, the composition obtained in step (iii) is subjected to compression moulding to obtain a graphene-polymer composite film with a thickness between 50 and 300 μm, preferably between 100 and 250 μm. Barrier properties of the graphene-polymer composite film can be conveniently evaluated by HCl permeation measurement.

Illustrated in Fig. 1 is a schematic sketch of the diffusion cell used by the inventor to measure HCl permeability through the graphene-polymer composite film. As shown in Fig. 1, the diffusion cell used in the inventor's lab includes a membrane holder constructed by the inventor to house a composite film (1) to be measured. The thickness of the composite film (1) is pre-measured and is typically between 100 to 200 μm. The composite film (1) divides the membrane holder into two sections: the first section above the film is used for storing a concentrated HCl (e.g. 30% HCl) and maintains an atmospheric pressure during operation by an air vent (not shown), and the second section below the film has an inlet (2) and an outlet (3) for an argon gas flow to pass through. In a permeability measurement, the HCl passing through the composite film is transported by the argon flow and later absorbed in a known volume of water outside the membrane holder, where the conductivity is measured to give the concentration of $H^+$ and $Cl^-$ in the water, and thus the total amount of HCl permeated through the composite film. The HCl permeation rate, on the other hand, can be calculated from the conductivity evolution with time based on the measured data. As such, the measured quantity or speed of the HCl permeation through the composite film reflects the film's ability to isolate two environments, i.e., the barrier properties of the film.

By plotting the measured conductivity (σ) against time (t) in the HCl permeation measurement, as shown in Fig. 2, two permeation phases were revealed. The first phase is the 'transition phase' (from time zero to time T1 in Fig. 2), when the HCl gas continuously dissolves in the composite film until it reaches HCl saturation. Noticeably, at the beginning of said transition phase, there is an initial period when no HCl gas passes through the test composite film - an indicator that the test film is acting as a qualified HCl barrier. As a result, the measured conductivity (σ) during this initial period in the HCl permeation measurement remains essentially unchanged, and mainly reflects the amount of $CO_2$ dissolved in the known volume of water. As used in the Examples provided in the present specification and the discussion associated therewith, the length of said initial period in one HCl gas permeation measurement, when the measured conductivity (σ) remains essentially unchanged, is considered as an index of "service life" for the test composite film.

Specifically, as applied in the Examples provided in the present specification, the service life of a test film in one HCl gas permeation measurement may be obtained by calculating the variation percentage (Δσ) of conductivity (σ) measured at each time point. The formula to calculate said variation percentage of conductivity is as below:

$$\Delta\sigma = 100\% * [\sigma\text{ (current time point)} - \sigma\text{ (previous time point)}] / \sigma\text{ (previous time point)}$$

If said variation percentage (Δσ) is significant, e.g. 10% or more, it is considered that the service life of the test film has ended.

Following the first transition phase is the second 'steady state phase' for HCl permeation through the composite film, when the HCl passes with a constant flow rate as indicated by the linear correlation observed between the measured conductivity and measuring time, between time T1 and time T2 in Fig. 2. Accordingly, the conductimeter may be calibrated to give a linear response of conductivity with changing HCl concentration measured in the water.

Moreover, as the HCl permeability of the composite film is known to be temperature sensitive, the barrier properties of the composites made by the present invention are characterized by HCl permeation measurement conducted under a precisely controlled temperature. For instance, the HCl permeation of one composite film made by the present process invention may be measured in a temperature-controlled oven set at approximately 40°C.

The graphene-polymer composite films made by the present process invention are found to posses superior barrier properties with a small percentage of graphene fillers in the base polymer. Moreover, the graphene-polymer composition manufactured by the present process invention also has excellent thermal stability and improved electrical conductivity, compared to the unfilled polymer.

The graphene-polymer composition manufactured by the present process invention can be used to make protective coating against corrosion, gas/liquid diffusion barrier, chemical leakage proof or other industrial products, such as pipes, reactors, valve liners, pumps, sealing products such as O-rings made from fluroelastomers, and container parts.

The content of the graphene filler in the composition manufactured by the present process invention may be between 0.1 % and 10% by weight, preferably between 0.1 % and 5% by weight, more preferably between 0.1 % and 3% by weight, and even more preferably between 0.5 and 2% by weight.

The process of the present invention can be applied to a number of polymers for incorporating the graphene filler -- essentially all polymers that can form an aqueous latex thereof.

The polymer used in the process of the present invention can be an elastomer. To the purpose of the present invention, the term "elastomer" is intended to designate a true elastomer or a polymer resin serving as a base constituent for obtaining a true elastomer. True elastomers as defined by the ASTM, Special Technical Bulletin, No. 184 standard as materials capable of being stretched, at room temperature, to twice their intrinsic length and which, once they have been released after holding them under tension for 5 minutes, return to within 10% of their initial length in the same time. Polymer resins serving as a base constituent for obtaining true elastomers are in general amorphous products having a glass transition temperature (Tg) below room temperature. In most cases, these products correspond to copolymers having a Tg below 0°C and including reactive functional groups (optionally in the presence of additives) allowing the true elastomer to be formed.

The polymer used in the present invention can also be thermoplastic polymer. For the purpose of the present invention, the term "thermoplastic" is understood to mean, for the purposes of the present invention, polymers existing, at room temperature (25°C), below their melting point if they are semi-crystalline, or below their $T_g$ if amorphous. These polymers have the property of becoming soft when they are heated and of becoming rigid again when hey are cooled, without there being an appreciable chemical change.

Preferably, the polymer used in the process of the present invention is a fluoropolymer, i.e. a polymer comprising recurring units derived from at least one fluorinated monomer.

To the purpose of the present invention, the fluoropolymer comprises preferably more than 20 % moles, more preferably more than 30 % moles of recurring units derived from the fluorinated monomer.

Non limitative examples of suitable fluorinated monomers are notably:

- $C_2$-$C_8$ fluoro- and/or perfluoroolefins, such as tetrafluoroethylene (TFE), hexafluoropropene (HFP), pentafluoropropylene, and hexafluoroisobutylene;
- $C_2$-$C_8$ hydrogenated monofluoroolefins, such as vinyl fluoride; 1,2-difluoroethylene, vinylidene fluoride (VDF) and trifluoroethylene (TrFE);
- (per)fluoroalkylethylenes complying with formula $CH_2$=CH-$R_{f0}$, in which $R_{f0}$ is a $C_1$-$C_6$ (per)fluoroalkyl or a $C_1$-$C_6$ (per)fluorooxyalkyl having one or more ether groups ;
- chloro- and/or bromo- and/or iodo-$C_2$-$C_6$ fluoroolefins, like chlorotrifluoroethylene (CTFE);
- fluoroalkylvinylethers complying with formula $CF_2$=CFOR$_{f1}$ in which $R_{f1}$ is a $C_1$-$C_6$ fluoro- or perfluoroalkyl, e.g. -$CF_3$, -$C_2F_5$, -$C_3F_7$ ;
- hydrofluoroalkylvinylethers complying with formula $CH_2$=CFOR$_{f1}$ in which $R_{f1}$ is a $C_1$-$C_6$ fluoro- or perfluoroalkyl, e.g. -$CF_3$, -$C_2F_5$, -$C_3F_7$ ;
- fluoro-oxyalkylvinylethers complying with formula $CF_2$=CFOX$_0$, in which $X_0$ is a $C_1$-$C_{12}$ oxyalkyl, or a $C_1$-$C_{12}$ (per)fluorooxyalkyl having one or more ether groups, like perfluoro-2-propoxy-propyl;
- fluoroalkyl-methoxy-vinylethers complying with formula $CF_2$=CFOCF$_2$OR $_{f2}$ in which $R_{f2}$ is a $C_1$-$C_6$ fluoro- or perfluoroalkyl, e.g. -$CF_3$, -$C_2F_5$, -$C_3F_7$ or a $C_1$-$C_6$ (per)fluorooxyalkyl having one or more ether groups, like -$C_2F_5$-O-$CF_3$;
- functional fluoro-alkylvinylethers complying with formula $CF_2$=CFOY$_0$, in which Yo is a $C_1$-$C_{12}$ alkyl or (per)fluoroalkyl, or a $C_1$-$C_{12}$ oxyalkyl or a $C_1$
- $C_{12}$ (per)fluorooxyalkyl, said Yo group comprising a carboxylic or sulfonic acid group, in its acid, acid halide or salt form; - fluorodioxoles, of formula :

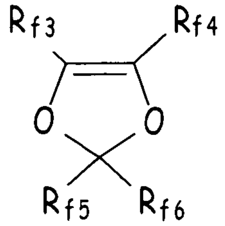

wherein each of $R_{f3}$, $R_{f4}$, $R_{f5}$ $R_{f6}$, equal or different each other, is independently a fluorine atom, a $C_1$-$C_6$ fluoro- or per(halo)fluoroalkyl, optionally comprising one or more oxygen atom, e.g. $-CF_3$, $-C_2F_5$, $-C_3F_7$, $-OCF_3$, $-OCF_2CF_2OCF_3$.

Fluoropolymers which have been found particularly suitable for the process of the present invention are per(halo)fluoropolymers and hydrogen-containing fluoropolymer. For the purpose of the invention, the term "per(halo)fluoropolymer" is intended to denote a fluoropolymer substantially free of hydrogen atoms. The per(halo)fluoropolymer can comprise one or more halogen atoms (Cl, Br, I) different from fluorine. The term "substantially free of hydrogen atom" is understood to mean that the per(halo)fluoropolymer consists essentially of recurring units derived from ethylenically unsaturated monomers comprising at least one fluorine atom and free of hydrogen atoms [per(halo)fluoromonomer (PFM)]. The per(halo)fluoropolymer can be a homopolymer of a per(halo)fluoromonomer (PFM) or a copolymer comprising recurring units derived from more than one per(halo)fluoromonomer (PFM).

Non limitative examples of suitable per(halo)fluoromonomers (PFM) are notably:

$C_2$-$C_8$ perfluoroolefins, such as tetrafluoroethylene (TFE) and hexafluoropropene (HFP);
chloro- and/or bromo- and/or iodo- $C_2$-$C_6$ per(halo)fluoroolefins, like chlorotrifluoroethylene;
per(halo)fluoroalkylvinylethers complying with general formula $CF_2$ $=CFOR_{f1}$ in which $R_{f1}$ is a $C_1$-$C_6$ per(halo)fluoroalkyl, such as $-CF_3$, $-C_2$ $F_5$, $-C_3F_7$ ;
per(halo)fluoro-oxyalkylvinylethers complying with general formula $CF_2$ $=CFOX_{01}$, in which $X_{01}$ is a $C_1$-$C_{12}$ per(halo)fluorooxyalkyl having one or more ether groups, like perfluoro-2-propoxy-propyl group;
per(halo)fluoro-methoxy-alkylvinylethers complying with general formula $CF_2=CFOCF_2OR_{f2}$ in which $R_{f2}$ is a $C_1$-$C_6$ per(halo)fluoroalkyl, such as $-CF_3$, $-C_2F_5$, $-C_3F_7$ or a $C_1$-$C_6$ per(halo)fluorooxyalkyl having one or more ether groups, such as $-C_2F_5$-O-$CF_3$; per(halo)fluorodioxoles of formula :

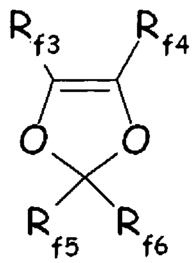

wherein each of $R_{f3}$, $R_{f4}$, $R_{f5}$, $R_{f6}$, equal of different each other, is independently a fluorine atom, a $C_1$-$C_6$ perfluoroalkyl group, optionally comprising one or more oxygen atom, e.g. $-CF_3$, $-C_2F_5$, $-C_3F_7$, $-OCF_3$, $-OCF_2CF_2OCF_3$; preferably a per(halo)fluorodioxole complying with formula here above, wherein $R_{f3}$ and $R_{f4}$ are fluorine atoms and $R_{f5}$ and $R_{f6}$ are perfluoromethyl groups ($-CF_3$) [perfluoro-2,2-dimethyl-1,3-dioxole (PDD)], or a per(halo)fluorodioxole complying with formula here above, wherein $R_{f3}$, $R_{f5}$ and $R_{f6}$ are fluorine atoms and $R_{f4}$ is a perfluoromethoxy group ($-OCF_3$) [2,2,4-trifluoro-5-trifluoromethoxy-1,3-dioxole or perfluoromethoxydioxole (MDO)].

The per(halo)fluoropolymer is advantageously chosen among tetrafluoroethylene (TFE) homopolymers and copolymers of TFE with at least one per(halo)fluoromonomer (PFM) different from TFE.

Good results have been obtained with TFE copolymers as above detailed comprising at least 1.5 % wt and at most 30 % wt of recurring units derived from the per(halo)fluoromonomer (PFM) different from TFE.

Preferred per(halo)fluoropolymers are selected among TFE copolymers comprising recurring units derived from at least one per(halo)fluoromonomer (PFM) chosen among the group consisting of:

1. perfluoroalkylvinylethers complying with formula $CF_2=CFOR_{f1'}$, in which $R_{f1'}$ is a $C_1$-$C_6$ perfluoroalkyl, e.g. $-CF_3$, $-C_2F_5$, $-C_3F_7$; and/or
2. perfluoro-oxyalkylvinylethers complying with general formula $CF_2$ $=CFOX_0$, in which $X_0$ is a $C_1$-$C_{12}$ perfluorooxyalkyl having one or more ether groups, like perfluoro-2-propoxy-propyl group; and/or
3. $C_3$-$C_8$ perfluoroolefins, such as hexafluoropropene (HFP); and/or
4. perfluorodioxoles of formula :

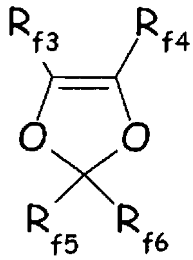

wherein each of $R_{f3}$, $R_{f4}$, $R_{f5}$, $R_{f6}$, equal of different each other, is independently a fluorine atom, a $C_1$-$C_6$ perfluoroalkyl group, optionally comprising one or more oxygen atom, e.g. $-CF_3$, $-C_2F_5$, $-C_3F_7$, $-OCF_3$, $-OCF_2CF_2OCF_3$.

More preferred per(halo)fluoropolymers are selected among TFE copolymers comprising recurring units derived from at least one per(halo)fluoromonomer (PFM) chosen among the group consisting of :

1. perfluoroalkylvinylethers complying with general formula $CF_2$=$CFOR_{f1}$ in which $R_{f1}$ is a $C_1$-$C_6$ perfluoroalkyl;
2. perfluoro-oxyalkylvinylethers complying with general formula $CF_2$ =$CFOX_{01}$, in which $X_{01}$ is a $C_1$-$C_{12}$ perfluorooxyalkyl having one or more ether groups;
3. $C_3$-$C_8$ perfluoroolefins; and
4. mixtures thereof.

According to one embodiment of the invention, the polymer used for forming the aqueous latex is chosen among TFE copolymers comprising recurring units derived from HFP and optionally from at least one per(halo)fluoroalkylvinylether, as above defined, preferably from at least one perfluoroalkylvinylether complying with general formula $CF_2$=$CFOR_{f1'}$ in which $R_{f1'}$ is a $C_1$-$C_6$ perfluoroalkyl.

Preferred polymers according to this embodiment are selected among TFE copolymers comprising (preferably consisting essentially of) recurring units derived from tetrafluoroethylene (TFE) and hexafluoropropylene (HFP) in an amount ranging from 3 to 15 wt % and, optionally, from 0.5 to 3 wt % of at least one perfluoroalkylvinylether, as above defined. Polymers according to this embodiment are commercially available under the trademark TEFLON® FEP 9494, 6100 and 5100 from E.I. DuPont de Nemours, or from Daikin (e.g. FEP NP-101 material), or from Dyneon LLC (FEP 6322). A description of such polymers can be found notably in US 4029868 (DU PONT) 14.06.1977 , in US 5677404 (DU PONT) 14.10.1997 , in US 5703185 (DU PONT) 30.12.1997 and in US 5688885 (DU PONT) 18.11.1997.

According to another embodiment of the invention, the polymer used to form the aqueous latex for co-coagulation is chosen among TFE copolymers comprising recurring units derived from at least one per(halo)fluoroalkylvinylether, as above defined, preferably from at least one perfluoroalkylvinylether, as above defined and optionally further comprising recurring units derived from $C_3$-$C_8$ perfluoroolefins. Good results within this embodiment have been obtained with TFE copolymers comprising recurring units derived from one or more than one perfluoroalkylvinylether as above specified; particularly good results have been achieved with TFE copolymers wherein the perfluoroalkylvinylether is perfluoromethylvinylether (of formula $CF_2$=$CFOCF_3$), perfluoroethylvinylether (of formula $CF_2$=$CFOC_2F_5$), perfluoropropylvinylether (of formula $CF_2$=$CFOC_3F_7$) and mixtures thereof.

According to a preferred variant of the aforementioned embodiment of the invention, the polymer used to form the aqueous latex for co-coagulation is advantageously a TFE copolymer consisting essentially of :

(a) from 3 to 13 %, preferably from 5 to 12 % by weight of recurring units derived from perfluoromethylvinylether;
(b) from 0 to 6 % by weight of recurring units derived from one or more than one fluorinated comonomer different from perfluoromethylvinylether and selected from the group consisting of perfluoroalkylvinylethers complying with general formula $CF_2$=$CFOR_{f1'}$ in which $R_{f1'}$ is a $C_1$-$C_6$ perfluoroalkyl and perfluoro-oxyalkylvinylethers complying with general formula $CF_2$=$CFOX_{01'}$, in which $X_{01'}$ is a $C_1$-$C_{12}$ perfluorooxyalkyl having one or more ether groups; preferably derived from perfluoroethylvinylether and/or perfluoropropylvinylether ;
(c) recurring units derived from tetrafluoroethylene, in such an amount that the sum of the percentages of the recurring units (a), (b) and (c) is equal to 100 % by weight.

Examples of TFE copolymer suitable to be used for the present invention include MFA and PFA which are commercially available from Solvay Solexis Inc. under the trade name of HYFLON® PFA P and M series and HYFLON® MFA.

As above mentioned, hydrogen-containing fluoropolymer represents another type of polymers which have been found particularly suitable for the process of the present invention. By "hydrogen-containing fluoropolymer" it is meant a fluoropolymer as above defined comprising recurring units derived from at least one hydrogen-containing monomer.

Said hydrogen-containing monomer may be the same monomer as the fluorinated monomer above defined or can be a different monomer. Thus, this definition encompasses notably copolymers of one or more per(halo)fluoromonomer (for instance tetrafluoroethylene, chlorotrifluoroethylene, hexafluoropropylene, perfluoroalkylvinylethers, etc.) with one or more hydrogenated comonomer(s) (for instance ethylene, propylene, vinylethers, acrylic monomers, etc.), and/or homopolymers of hydrogen-containing fluorinated monomers (for instance vinylidene fluoride, trifluoroethylene, vinyl fluoride, etc.) and their copolymers with fluorinated and/or hydrogenated comonomers.

The hydrogen-containing fluoropolymer is preferably chosen among :

(A-1) TFE and/or CTFE copolymers with ethylene, propylene or isobutylene (preferably ethylene), with a molar ratio per(halo)fluoromonomer(s)/hydrogenated comonomer(s) of from 30:70 to 70:30, optionally containing one or more comonomers in amounts of from 0.1 to 30 % by moles, based on the total amount of TFE and/or CTFE and hydrogenated comonomer(s) (see for instance U.S. Pat. No. 3,624,250 and U.S. Pat. No. 4,513,129);

(A-2) Vinylidene fluoride (VdF) polymers, optionally comprising one or more fluorinated comonomer(s) (see for instance U.S. Pat. No. 4,524,194 and U.S. Pat. No. 4,739,024), and optionally further comprising one or more hydrogenated comonomer(s); and

mixtures thereof.

The CTFE or TFE copolymers (A-1) preferably comprise :

(a) from 35 to 65%, preferably from 45 to 55%, more preferably from 48 to 52% by moles of ethylene (E);

(b) from 65 to 35%, preferably from 55 to 45%, more preferably from 52 to 48% by moles of chlorotrifluoroethylene (CTFE) (for the ECTFE polymers, hereinafter) and/or tetrafluoroethylene (TFE) (for the ETFE polymers, herein after); and optionally;

(c) from 0.1 to 30%, by moles, preferably 0.1 to 10 % by moles, more preferably 0.1 to 5% by moles, based on the total amount of monomers (a) and (b), of one or more fluorinated comonomer(s) (c1) and/or hydrogenated comonomer(s) (c2).

Examples of fluorinated comonomers (c1) include (per)fluoroalkylvinylethers, perfluoroalkylethylenes (such as perfluorobutylethylene), (per)fluorodioxoles as described in U.S. Pat. No. 5,597,880, vinylidenefluoride (VdF). Among them, preferred (c1) comonomer is perfluoropropylvinylether of formula $CF_2$=CFO-$C_3F_7$.

Among comonomers (c), hydrogenated comonomers (c2) are preferred. As non limitative examples of hydrogenated comonomers (c2), mention may be notably made of those having the general formula :

$$CH_2=CH-(CH_2)_nR_1 \qquad (I)$$

wherein $R_1$ =$OR_2$, or -$(O)_tCO(O)_pR_2$ wherein t and p are integers equal to 0, 1 and $R_2$ is a hydrogenated radical $C_1$-$C_{20}$ from 1 to 20 carbon atoms, of alkyl type, linear or branched when possible, or cycloalkyl, optionally containing heteroatoms and/or chlorine atoms, the heteroatoms preferably being O or N, $R_2$ optionally contains one or more functional groups, preferably selected from OH, COOH, epoxide, ester and ether, $R_2$ optionally contains double bonds, or $R_2$ is H, n is an integer in the range 0-10. Preferably $R_2$ is of alkyl type from 1 to 10 carbon atoms containing functional groups of hydroxide type, n is an integer in the range 0-5.

The preferred hydrogenated comonomers (c2) are selected from the following classes :

1. Acrylic monomers having the general formula :

$$CH_2=CH-CO-O-R_2$$

wherein $R_2$ has the above mentioned meaning. As non limitative examples of suitable acrylic monomers, mention can be notably made of ethylacrylate, n-butylacrylate, acrylic acid, hydroxyethylacrylate, hydroxypropylacrylate, (hydroxy) ethylhexylacrylate.

2. Vinylether monomers having the general formula :

$$CH_2=CH-O-R_2$$

wherein $R_2$ has the above mentioned meaning. As non limitative examples of suitable vinylether monomers, mention can be notably made of propylvinylether, cyclohexylvinylether, vinyl-4-hydroxybutylether.

3. Vinyl monomers of the carboxylic acid having the general formula :

$CH_2=CH-O-CO-R_2$

wherein $R_2$ has the above mentioned meaning. As non limitative examples of suitable vinyl monomers of the carboxylic acid, mention can be notably made of vinyl-acetate, vinylpropionate, vinyl-2-ethylhexanoate.
4. Unsaturated carboxylic acid monomers having the general formula :

$CH_2=CH-(CH_2)_n-COOH$

wherein n has the above mentioned meaning. As non-limitative example of suitable unsaturated carboxylic acid monomer, mention can be notably made of vinylacetic acid.

More preferred comonomer (c2) is n-butylacrylate.

Among A-1 polymers, ECTFE polymers are preferred. Particularly adapted to the process of the present invention is ECTFE available from Solvay Solexis Inc., Thorofare, New Jersey, USA, under the tradename HALAR® and VATAR®

More preferably, the hydrogen-containing fluoropolymer is a VdF polymer (A-2).

The VdF polymer (A-2) preferably comprises :

(a') at least 60 % by moles, preferably at least 75 % by moles, more preferably 85 % by moles of vinylidene fluoride (VdF);
(b') optionally from 0.1 to 15%, preferably from 0.1 to 12%, more preferably from 0.1 to 10% by moles of a fluorinated comonomer chosen among vinylfluoride ($VF_1$), chlorotrifluoroethylene (CTFE), hexafluoropropene (HFP), tetrafluoroethylene (TFE), perfluoromethylvinylether (MVE), trifluoroethylene (TrFE) and mixtures therefrom; and
(c') optionally from 0.1 to 5 %, by moles, preferably 0.1 to 3 % by moles, more preferably 0.1 to 1% by moles, based on the total amount of monomers (a') and (b'), of one or more fluorinated or hydrogenated comonomer(s).

As non limitative examples of the VdF polymers useful in the present invention, mention can be notably made of homopolymer of VdF, VdF/TFE copolymer, VdF/TFE/HFP copolymer, VdF/TFE/CTFE copolymer, VdF/TFE/TrFE copolymer, VdF/CTFE copolymer, VdF/HFP copolymer, VdF/TFE/HFP/CTFE copolymer, VdF/TFE/perfluorobutenoic acid copolymer, VdF/TFE/maleic acid copolymer and the like.

According to an embodiment of the invention, the polymer used for the process of the present invention is a mixture of at least one VdF homopolymer and at least one VdF copolymer chosen among the group consisting of VdF copolymers comprising from 0.1 to 15%, preferably from 0.1 to 12%, more preferably from 0.1 to 10% by moles of a fluorinated comonomer chosen among vinylfluoride ($VF_1$), chlorotrifluoroethylene (CTFE), hexafluoropropene (HFP), tetrafluoroethylene (TFE), perfluoromethylvinylether (MVE), trifluoroethylene (TrFE) and mixtures therefrom.

The polymer latex used in the process of the present invention can be prepared by any polymerizing means known in the art, including but not limited to aqueous free-radical emulsion polymerization route. Typically, in said aqueous free-radical emulsion polymerization, a reactor is generally charged with deionized water, water-soluble surfactant capable of emulsifying the reactant mass during polymerization and optional paraffin wax antifoulant. The mixture is generally stirred and deoxygenated. A predetermined amount of chain transfer agent (CTA) can be advantageously introduced into the reactor, the reactor temperature is generally raised to the desired level and the monomer(s) is usually fed into the reactor. Typically, once the initial charge of the monomer(s) is introduced and the pressure in the reactor has reached a desired level, an initiator emulsion or solution is introduced to start the polymerization reaction. The temperature of the reaction can vary depending on the characteristics of the initiator and the monomer selected, and one of skill in the art will know how to select the same. Typically the temperature will be from about 30° to 150°C, preferably from about 60° to 110°C. Generally, once the desired amount of polymer has been reached in the reactor, the monomer feed is stopped, but initiator feed is optionally continued to consume residual monomer. Residual gases (containing unreacted monomers) are typically vented and the latex can be recovered from the reactor.

The surfactant used in the polymerization can be any surfactant known in the art to be useful in aqueous free-radical emulsion polymerization, including perfluorinated, partially fluorinated, and non-fluorinated surfactants. Nevertheless, the polymerization can be also carried out in the absence of surfactant or in presence of an *in situ* generated oligomer having stabilizing properties.

The polymerization generally results in an aqueous latex of polymer generally having a solid level of 10 to 60 percent by weight, preferably 10 to 50 percent, and having a average particle size of less than 500 nm, preferably less than 400 nm, and more preferably less than 300 nm. The average particle size is generally at least 20 nm and preferably at least 50 nm.

The aqueous latex of polymer can be used as such for co-coagulating with the graphene suspension according to the process of the present invention. This represents a significant advantage of the present process invention over

the aforementioned heat-extrusion mixing process, by saving the energy-consuming heat melting treatment of the base polymer before mixing it with graphene fillers.

The aqueous latex of polymer used in the present invention can comprise at least one surfactant. The surfactant is generally intended to improve shelf-stability and provide additional stabilization of the polymer.

Said surfactant can be provided, as a whole or in part, in combination with the polymer in the aqueous polymer latex, as a result of the emulsion polymerization process, and/or can be add, as a whole or in part, after polymerization.

The surfactant can be selected notably from fluorinated surfactant [surfactant (FS)] and hydrogenated surfactants free from fluorine atoms [surfactant (H)].

Surfactants (FS), if used, are generally provided in combination with the polymer, in the aqueous latex of polymer (F) comprising said surfactant (FS), as a result of the emulsion polymerization process. The fluorinated surfactant (FS) typically complies with formula (III) here below:

$$R_{f§}(X^-)_k(M^+)_k \qquad (III)$$

wherein:

- $R_{f§}$ is selected from a $C_5$-$C_{16}$ (per)fluoroalkyl chain, optionally comprising one or more catenary or non-catenary oxygen atoms, and a (per)fluoropolyoxyalkyl chain,
- $X^-$ is selected from $-COO^-$ , $-PO_3^-$ and $-SO_3^-$,
- $M^+$ is selected from $NH_4^+$ and an alkaline metal ion, and
- k is 1 or 2.

Non-limitative examples of fluorinated surfactants (FS) suitable for the aqueous emulsion polymerization process of the invention include, notably, the followings:

(a) $CF_3(CF_2)_{n0}COOM'$, wherein $n_0$ is an integer ranging from 4 to 10, preferably from 5 to 7, preferably $n_1$ being equal to 6, and M' represents $NH_4$, Na, Li or K, preferably $NH_4$ ;
(b) $T-(C_3F_6O)_{n1}(CFXO)_{m1}CF_2COOM''$, wherein T represents a Cl atom or a perfluoroalkoxyde group of formula $C_xF_{2x}+_{1-x'}Cl_{x'}O$, wherein x is an integer ranging from 1 to 3 and x' is 0 or 1, $n_1$ is an integer ranging from 1 to 6, $m_1$ is an integer ranging from 0 to 6, M" represents $NH_4$, Na, Li or K and X represents F or $-CF_3$;
(c) $F-(CF_2CF_2)_{n2}-CH_2-CH_2-RO_3M'''$, in which R is a phosphorus or a sulphur atom, preferably R being a sulphur atom, M''' represents $NH_4$, Na, Li or K and $n_2$ is an integer ranging from 2 to 5, preferably $n_2$ being equal to 3;
(d) $[R_f-O-L-COO^-]_iX^{i+}$, wherein L represents a linear partially or fully fluorinated alkylene group or an aliphatic hydrocarbon group, $R_f$ represents a linear partially or fully fluorinated aliphatic group or a linear partially or fully fluorinated aliphatic group interrupted with one or more oxygen atoms, $X^{i+}$ represents a cation having the valence i and i is 1, 2 or 3;
(e) $A-R_{bf}-B$ bifunctional fluorinated surfactants, wherein A and B, equal to or different from each other, have formula $-(O)_pCFX''-COOM^*$, wherein M* represents $NH_4$, Na, Li or K, preferably M* representing $NH_4$, X" is F or $-CF_3$ and p is an integer equal to 0 or 1, and $R_{bf}$ is a divalent (per)fluoroalkyl or (per)fluoropolyether chain such that the number average molecular weight of $A-R_{bf}-B$ is in the range of from 300 to 1800; and
(f) mixtures thereof.

Non-limitative examples of suitable hydrogenated surfactants (H) include, notably, ionic and non-ionic hydrogenated surfactants such as 3-allyloxy-2-hydroxy-1-propane sulfonic acid salts, polyvinylphosphonic acid, polyacrylic acids, polyvinyl sulfonic acid, and salts thereof, octylphenol ethoxylates, polyethylene glycol and/or polypropylene glycol and the block copolymers thereof, alkyl phosphonates and siloxane-based surfactants.

Surfactants (H), if added in the aqueous polymer latex used in the present process invention, are generally added to the aqueous polymer latex after the emulsion polymerization.

Hydrogenated surfactants (H) which may be preferably added to the aqueous latex are non-ionic surfactants commercially available as TRITON® X series and PLURONIC® series.

**Brief description of drawings**

Fig. 1 illustrates a schematic sketch of the gas diffusion cell used by the inventor to measure the HCl permeability through the graphene-polymer composite film.
Fig. 2 represents the observed correlation of measured conductivity and measuring time during the HCl permeability

measurement of the graphene-polymer composite film.

## Description of embodiments

The invention will be now described in more details with respect to the following examples, whose purpose is merely illustrative and not intended to limit the scope of the invention.

EXAMPLE 1

a) Preparation of Graphite Oxide

Preparation of graphite oxide in this example is a process comprising four consecutive steps below.

Step (A): 1 gram of expanded graphite (TIMREX® Therm 002 from TIMCAL) was poured into a 2-L glass double-wall reactor vessel. The reactor vessel was connected with a PTFE-coated agitator and an external cooling device. The reactor vessel was also equipped with one baffle, to avoid vortex generation when mixing of the reaction medium by the PTFE-coated agitator. The agitator had three blades oriented to produce a pumping effect at the direction of the top of the reactor. A nitrogen atmosphere was maintained in the reactor vessel for the entire reaction duration. 100 ml of 98% Sulphuric acid was subsequently introduced into the reactor vessel, while the associated external cooling device setting its temperature at 25°C. The rotation speed of the agitator in the reactor was adjusted to 300 rpm, and remained unchanged for the entire 1-hour duration of Step (A).

Step (B): While maintaining cooling and the vigorous agitation in the reaction medium, oxidizing reagents of 0.75 gram sodium nitrate (from Sigma-Aldrich) and 4.5 gram potassium permanganate (from Sigma-Aldrich) were introduced in the reactor vessel, at a speed low enough to avoid a substantive temperature change (±1°C) in the reaction medium. As soon as all the oxidizing reagents were introduced, the reactor vessel was isolated from sun light by an aluminium foil. In the reaction vessel, the temperature was maintained at 25°C and the rotation speed of the agitator remained at 300 rpm, for 16 hours.

Step (C): The reactor vessel was heated up to 35°C and the rotation speed of the agitator therein maintained at 300 rpm, for a period of 96 hours. The end product of Step (C) was a gray, pasty reaction medium.

Step (D): The temperature setting point of the cooling device was re-adjusted to 25°C and, with the reaction medium continuously being stirred by the agitator at 300 rpm, 200ml of deionized water was added at a speed low enough to keep the temperature in the reaction medium below 80°C. The Applicant noted that this water addition process was notably exothermic in the viscous reaction medium, and therefore needed to be closely watched to keep the medium temperature below 80°C even with an efficient cooling device. Next, 30ml of 30% $H_2O_2$ (from Merck) was slowly added into the reactor, giving a reaction medium of yellow colour. Some shining particles (graphene platelets) were visible. A neutralizing agent of anhydrous sodium bicarbonate (from Sigma-Aldrich) was then slowly and carefully added to the reactor vessel, until the reaction medium reached a pH of 7. The addition speed of the anhydrous sodium bicarbonate was sufficiently slow to avoid chemical spill or projection accident due to foaming of the reaction medium. The resulting graphite oxide suspension had a high transparency, and restacking was observed upon drying a droplet thereof.

b) Dialyrsis of graphite oxide suspension

Approximately 100ml of the neutral suspension obtained in Example 1a was introduced in a dialysis tube (Spectra/For® 7 cellulose ester membrane from Spectrum Laboratories; molecular cut-off: 1000 kDa; 3.1 or 1.3 ml/cm), filling up to about half of the tube. Up to 5 tubes of ~100 ml capacity were introduced in a 10-L reactor and deionized water was continuously introduced in the reactor at a flow rate of approximately 5 liter per hour. The entire dialysis duration in Example 1b was 47 hour.

c) Co-coaaulation of the Graphene oxide suspension with polymer latex: Obtainment of Nanocomposite Sample Nos. 1-4

50 ml of the dialysed graphite oxide suspension obtained in Example 1b was sonicated using a Bandelin SONOPULS HD 2200 homogenizer (200 watts; 10 min), and a titanium sonotrode (TT13; diameter:13 mm) was applied in the sonication. The sonication was delivered by a pulsed mode (50% duty cycle) to avoid excessive heat build-up in the suspension. During the sonication process the temperature in the dialysed graphite oxide suspension was kept below 40°C with appropriate cooling.

The suspension was then centrifuged using HERAEUS OMNIFUGE 2.0 RS equipped with 30 ml tubes (4000 rpm; 20 min), to remove a small amount of aggregates that precipitated under the centrifugal force. After that, a colloidal suspension of graphene oxide was obtained from the remaining supernatant (measured pH = 7). Hereinafter, this colloidal suspension of graphene oxide will be referred to as the "GO colloidal suspension".

Next, 10ml of the collected GO colloidal suspension was diluted by an appropriate amount of deionised water. An aqueous latex of Hyflon® PFA M620 (from Solvay) was then added dropwise in the diluted graphene oxide suspension and the two were mixed together by a PTFE magnet stirring bar (rotating speed: 300 rpm; duration: 10 min). After mixing, 0.06 ml of 65% $HNO_3$ was added dropwise to the graphene oxide/polymer latex mixture to co-coagulate the mixture, and the reaction medium was continually stirred with a PTFE magnet stirring bar (rotating speed: 200 rpm; duration: 1 minute). The product of the coagulation process was washed with deionised water on a 5 $\mu$m PTFE filter, and subsequently subjected to a first vacuum drying treatment (200 mbar, 100°C, 24 hours) and a second vacuum drying treatment (below 10 mbar, 250°C, 48 hours) to obtain a nanocomposite sample in powderous form. The powderous nanocomposite was then compression moulded between two Inox plates (each equipped with a 100 $\mu$m aluminium sheet and a 100 $\mu$m Kapton sheet; heated at 350°C) to get a composite film for HCl permeation measurement.

Following the procedure detailed in the above paragraph and with reference to the parameters recorded in Table 1, four graphene-filled polymer nanocomposite samples (Nos. 1-4) with different filler content were obtained, as listed in Table 1. The filler weight content in each sample was calculated by dividing the solid weight of graphene oxide by the solid weight of the polymer latex used in co-coagulation, wherein the solid weight of graphene oxide was obtained by weighing the solid remained after vacuum drying (200 mbar; 40°C; 24 h) an equivalent amount (10ml) of un-diluted GO suspension used for each nanocomposite sample, and the solid weight of polymer latex was obtained by weighing the solid remained after vacuum drying (200 mbar; 40°C; 24 h) an equivalent volume of Hyflon® PFA M620 latex used for each nanocomposite sample.

d) Barrier Properties evaluation for Nanocomposite Sample Nos. 1-4

The rate of HCl permeation through the composite film made from nanocomposite samples 1-4 was measured at 37°C, using the diffusion cell illustrated in Fig. 1. The HCl permeability of each measured film was expressed in the unit of $g.mm.m^{-2}.d^{-1}$, the value corresponding to the mass of HCl (gram) that passed through the film over time (days), relative to the film thickness (mm) and the HCl-exposed surface area of the film (m 2), as shown in Table 1.

As shown in Fig. 1, the diffusion cell used included a 50mm membrane holder constructed by the inventor to house the composite film (1) to be measured. The HCl-exposed surface of the composite film was a circular area with a diameter of 33 mm. The composite film (1) divided the membrane holder into two sections: the first section above the film was filled a 30% HCl and maintained an atmosphere pressure during operation by an air vent (not shown); and the second section below the film has an inlet (2) and an outlet (3), through which an argon gas flow was let through during the measurement. In a permeability measurement process, the HCl passing through the composite film was transported by the argon flow and later absorbed in a volume of water outside the membrane holder, where the conductivity was measured to give the concentration of $H^+$ and $Cl^-$ in the water, and thus the total amount of HCl permeated through the composite film, as well the HCl permeability of each measured film in the steady state phase (i.e. between time T1 and T2 in Fig. 2 as afore-discussed) expressed in the unit of $g.mm.m^{-2}.d^{-1}$.

Additionally, the service life of the film Sample No. 3 according to the present invention, namely the initial period in its HCl permeation measurement when the measured conductivity remained essentially unchanged, was calculated using the mathematical approach described in the foregoing text. As used herein, the conductivity in the initial period was measured every 30 minutes and when the variation percentage ($\Delta\sigma$) was calculated to exceed10%, the service life of the test film was considered to have ended. This calculation gave a service life of 4 hours for the film Sample No. 3.

**Table 1**

**Process parameters for preparing graphene-filled nanocomposite sample Nos. 1-4, and the characterization thereof by filler content and permeability**

| | No.1 | No.2 | No.3 | No.4 |
|---|---|---|---|---|
| **Process parameter** | | | | |
| Volume of GO suspension collected from centrifuge (ml) | 10 | 10 | 10 | 10 |
| Volume of the water-diluted GO suspension (ml) | 100 | 20 | 50 | 50 |
| Volume of Hyflon® PFA M620 latex added to the diluted GO suspension (ml) | 19 | 7.5 | 3.8 | 2.5 |
| **filler content** | | | | |
| (wt%) | 0.2 | 0.5 | 1.0 | 1.5 |

(continued)

| PERMEABILITY | | | | |
|---|---|---|---|---|
| HCl permeation rate ($g \cdot mm \cdot m^{-2} \cdot d^{-1}$) | 0.012 | 0.012 | 0.007 | 0.010 |
| Film thickness ($\mu m$) | 149 | 154 | 311 | 147 |

EXAMPLE 2

The process of Example 1 was generally followed to produce a graphene-polymer nanocomposite (sample No. 5), expect that:

a) For preparation of graphite oxide:

- The 2-L reactor vessel was equipped with two baffles;
- 2 gram of graphite flakes (from Sigma-Aldrich) was used as the precursor graphite;
- 200 ml of 98% Sulphuric acid was added to the graphite flakes while the cooling device set the temperature at 15°C;
- The rotation speed of the PTFE-coated agitator was set at 400 rpm and remained unchanged for the entire 17-hour duration of Step (A);
- The oxidizing reagents are 1.50 gram of sodium nitrate and 9.0 gram of potassium permanganate, and were added at a speed sufficient low to help maintain the temperature in the reaction medium within - 4 $\pm$1°C;
- The rotation speed of the agitator remained at 400 rpm, and the cooling device set at - 4°C, while the reaction mixture was isolated from light for 7 hours in Step (B);
- The reactor vessel was heated up to 35°C and the rotation speed of the agitator therein maintained at 400 rpm, for the entire 72-hour duration of Step (C);
- 400ml of deionized water was added in Step (D), before 35ml of 30% $H_2O_2$ was slowly added into the reactor; and,
- No neutralizing agent was added to the reactor vessel after the $H_2O_2$ addition, making the reaction medium an acidic mixture with a pH of 0.5;

b) For dialysis of graphite oxide solution, the aforementioned acidic mixture was dialysed with deionized water; and
c) For co-coagulation: 13 ml of un-diluted Hyflon® PFA M620 latex was added dropwise to a reactor containing 36 ml of the GO colloidal suspension collected from the centrifuge (measured pH = 5), and the two were mixed together by a PTFE magnet stirring bar (rotating speed: 75 rpm; duration: 10 min), after which 0.12 ml of 65% $HNO_3$ was added dropwise to co-coagulate the mixture, with the reaction medium continually stirred with a PTFE magnet stirring bar (rotating speed: 100 rpm; duration: 1 min);

The powderous nanocomposite of Sample No. 5 obtained after vacuum drying was compression moulded to get a 144 $\mu$m thick film for HCl permeation measurement, as in Example 1. The rate of HCl permeation through the film was measured to be 0.002 $g \cdot mm \cdot m^{-2} \cdot d^{-1}$, using the same measurement method as described in Example 1d. The filler weight content of the nanocomposite sample No. 5 was calculated to be 1wt%, following the same approach described in Example 1 c.

EXAMPLE 3

The process of Example 1 was generally followed to produce a graphene-polymer nanocomposite (sample No. 6), expect that

a) For preparation of graphite oxide:

- The 2-L reactor vessel was equipped with two baffles;
- 4.5 gram of graphite flakes (from Sigma-Aldrich) was used as the precursor graphite;
- 600 ml of 98% Surfuric acid was added to the graphite flakes while the cooling device set the temperature at -10°C;
- The rotation speed of the PTFE-coated agitator was set at 200 rpm and remained unchanged for the entire 4-hour duration of Step (A);
- The oxidizing reagents are 3.40 gram of sodium nitrate and 20.4 gram of potassium permanganate, and were added at a speed sufficient low to help maintain the temperature in the reaction medium within - 10 $\pm$1° C;

- The rotation speed of the agitator remained at 200 rpm, and the cooling device set at - 10°C, while the reaction mixture was isolated from light for 24 hours in Step (B);
- The reactor vessel was heated up to 35°C and the rotation speed of the agitator therein maintained at 200 rpm, for the entire 168-hour duration of Step (C);
- 750ml of deionized water was added to dilute the reaction medium in Step (D), after which 30ml of 30% $H_2O_2$ was slowly added into the reactor, resulting in a reaction medium where no shining graphene platelets were visible; and,
- No neutralizing agent was added to the reactor vessel after the $H_2O_2$ addition, making the reaction medium an acidic mixture with a pH of 0.5;

b) For dialysis of graphite oxide solution, the aforementioned acidic mixture was dialysed with deionized water for 120 hours, using dialysis tubes having a molecular cut-off of 15000 kDa;

c) For co-coagulation: 1.7ml of Hyflon® PFA M620 latex was diluted to 5 ml with deionised water, and the 5 ml of diluted Hyflon® PFA M620 latex was then added dropwise to a reactor containing 5 ml of the GO colloidal suspension collected from the centrifuge (measured pH = 5), and the two were mixed together by a PTFE magnet stirring bar (rotating speed: 75 rpm; duration: 10 min), after which 1 ml of 65% $HNO_3$ was added dropwise to co-coagulate the mixture, with the reaction medium continually stirred with a PTFE magnet stirring bar (rotating speed: 150 rpm; duration: 10 min).

The powderous nanocomposite of Sample No. 6 obtained after vacuum drying was compression moulded to get a 141 μm thick film for HCl permeation measurement, as in Example 1. The rate of HCl permeation through the film was measured to be 0.002 $g \cdot mm \cdot m^{-2} \cdot d^{-1}$, using the same measurement method as described in Example 1 d. The filler weight content of the nanocomposite sample No. 6 was calculated to be 1wt%, following the same approach described in Example 1c

EXAMPLE 4

In this example, the dialysed graphene suspension was obtained as described in Example 3, except that the reaction medium used in the step (C) of Example 3a was continually stirred with the agitator for 192 hours, instead of 168 hours.

The co-coagulation procedure in Example 4 also generally follows the same procedure in Example 3, except that: 0.2ml of Hyflon® PFA M620 latex was diluted to 5 ml with deionised water, and the 5 ml of diluted Hyflon® PFA M620 latex was then added dropwise to a reactor containing 6.2 ml of the GO colloidal suspension collected from the centrifuge (measured pH = 5), and the two were mixed together by a PTFE magnet stirring bar (rotating speed: 75 rpm; duration: 10 min), after which 2 ml of 65% $HNO_3$ was added dropwise to co-coagulate the mixture, with the reaction medium continually stirred with a PTFE magnet stirring bar (rotating speed: 150 rpm; duration: 10 min).

The powderous nanocomposite of Sample No. 7 obtained after vacuum drying was compression moulded to get a 206 μm thick film for HCl permeation measurement, as in Example 1. The rate of HCl permeation through the film was measured to be 0.028 $g \cdot mm \cdot m^{-2} \cdot d^{-1}$, using the same measurement method as described in Example 1 d. The filler weight content of the nanocomposite sample No. 7 was calculated to be 0.2 wt%, following the same approach described in Example 1 c.

For comparison purpose, some key processing parameters for preparing graphene-filled nanocomposite sample Nos. 5-7 were relisted in Table 2 below, together with the samples' properties.

COMPARATIVE EXAMPLE 1

In order to provide a comparison with films made from un-filled polymer, five 200 μm films were made from Hyflon® PFA M620 by compression moulding using the same condition described in Example 1 c. HCl permeation through the film made from Hyflon® PFA M620 latex was measured in the same manner as described in Example 1 d, with the average result listed in Table 2.

Additionally, the service life of the unfilled film used in this comparative Example, via the same calculation approach in Example 1, was estimated to be 1 hour. This value is merely one fourth of the service life for the composite film Sample No. 3 in Example 1.

COMPARATIVE EXAMPLE 2

Eleven 200 μm films were made from Hyflon® MFA® P6010 powder by compression moulding, using the same condition described in Example 1c. HCl permeation through the film made from Hyflon® MFA® P6010 was measured

in the same manner as described in Example 1d.

**Table 2**

Process parameters for preparing graphene-filled nanocomposite sample Nos. 5-7, the characterization of the samples and the comparative examples 1-2

| | Ex. 2 (No.5) | Ex. 3 (No.6) | Ex. 4 (No.7) | Cp Ex.1 (Hyflon® PFA M620) | Cp Ex. 2 (Hyflon® MFA P6010) |
|---|---|---|---|---|---|
| **Process parameter** | | | | | |
| Volume of un-diluted GO suspension collected from centrifuge (ml) | 36 | 5 | 6.2 | -- | -- |
| Volume of polymer latex added to the un-diluted GO suspension (ml) | 13 | 1.7 | 0.2 | -- | -- |
| **filler content** | | | | | |
| (wt%) | 1 | 1 | 0.2 | 0 | 0 |
| **PERMEABILITY** | | | | | |
| HCl permeation rate ($g \cdot mm \cdot m^{-2} \cdot d^{-1}$) | 0.002 | 0.002 | 0.028 | $0.037 \pm 0.01$ 1 | $0.030 \pm 0.006$ 2 |
| Film thickness ($\mu m$) | 144 | 141 | 206 | $170 \pm 10$[1] | $150 \pm 5$[2] |

[1]The average value of permeability/thickness measured from 5 Hyflon® PFA M620 films,
[2] The average value of permeability/thickness measured from 11 Hyflon® MFA P6010 films

As seen from the data in Table 1 and Table 2 above, the graphene-filled polymer nanocomposite films obtained from the Examples of the present invention demonstrate superior barrier properties compared to the un-filled polymer films, in that the former greatly reduced the HCl permeation rate for the latter.

Moreover, the graphene-filled polymer nanocomposite films according to the present invention also noticeably increased its service life as qualified HCl barrier (to as much as 400%), in the extreme test environment.

## Claims

1. A process for producing a composition comprising graphene and at least one polymer, the process comprising the steps of:

   (i) providing an aqueous suspension of graphene [dispersion (G)];
   (ii) mixing the dispersion (G) with an aqueous polymer latex to obtain a liquid mixture [mixture (M)]; and
   (iii) co-coagulating the mixture (M) to obtain said composition, wherein the polymer is a fluoropolymer which comprises recurring units derived from at least one fluorinated monomer.

2. The process according to claim 1, wherein the polymer is a per(halo)fluoropolymer, which refers to a fluoropolymer substantially free of hydrogen atoms and optionally comprises one or more halogen atoms different from fluorine.

3. The process according to claim 1 or 2, wherein the aqueous suspension of graphene provided in step (i) is an aqueous suspension of graphene oxide, and wherein the graphene oxide has an oxygen content of between 1% and 90% by weight.

4. The process according to claim 3, wherein the graphene oxide has an oxygen content of between 30% and 60% by weight.

5. The process according to any of the preceding claims, further including the step of heating the composition obtained in step (iii), wherein the heating temperature is above 250°C.

**6.** The process according to any of the preceding claims, wherein step (i) comprises subjecting an aqueous suspension of graphite oxide to sonication, to obtain an aqueous suspension of graphene oxide.

**7.** The process according to any of the preceding claims, wherein step (i) includes the following steps:

(i-a) mixing graphite with a concentrated sulphuric acid, wherein the concentrated sulphuric acid is a water solution of $H_2SO_4$ having a concentration of at least 80 wt%;
(i-b) introducing at least one oxidizing agent to the mixture obtained in (i-a) to obtain over-oxygenated graphite salts;
(i-c) adding water to the over-oxygenated graphite salts in step (i-b) to obtain a first graphite oxide suspension [S1];
(i-d) removing metallic and non-metallic ions from the first graphite oxide suspension [S1] to obtain a second graphite oxide suspension [S2]; and
(i-e) subjecting the second graphite oxide suspension [S2] to sonication or, alternatively, stirring the graphite oxide/water mixture in the suspension [S2], to obtain an aqueous suspension of graphene oxide.

**8.** The process according to claim 7, **characterized in that** an amount of hydrogen peroxide is added to the water-diluted graphite oxide suspension [S1], prior to step (i-d), to reduce the residual permanganate and manganese dioxide to manganese sulphate in the suspension [S1], wherein the amount of hydrogen peroxide to the graphite used in step (i-a) ranges from 1.5:1 to 10:1 by weight.

**9.** The process according to claim 3, wherein the aqueous suspension of graphene oxide provided in step (i) is manufactured via a method comprising the following steps:

(i-A) dispersing graphite oxide having an oxygen content between 5% and 30% in an aqueous solution of sulphuric acid having a concentration of $H_2SO_4$ between 10 wt% and 96wt%, by sonication, so as to obtain a first graphene oxide dispersion (D1) with a pH in the range of 2 to 5;
(i-B) adding an amount of hydrogen peroxide to the first graphene oxide dispersion (D1), optionally under sonication, to provide a second dispersion (D2), wherein the weight ratio of graphite oxide dispersed in (i-A) to the amount of hydrogen peroxide is between 1:10 and 1:50;
(i-C) adding to the second dispersion (D2) a soluble Fe (II) salt to give a third dispersion (D3), wherein the weight ratio of the Fe(II) salt added in (i-C) to the hydrogen peroxide added in (i-B) is between 1:10 and 1:100;
(i-D) optionally neutralizing said third dispersion (D3) with a base to reach a pH of 6.0-8.0; and
(i-E) removing Fe(III) and possibly other impurities to obtain an essentially iron free oxidized suspension of graphene oxide.

**10.** The process according to claim 6, **characterized in that** the aqueous suspension of graphene oxide obtained in step (i) is further purified by centrifugation, to remove a small amount of aggregates that precipitate under the centrifugal force, so as to obtain a colloidal suspension of graphene oxide platelets from the remaining supernatant.

**11.** The process according to any of the preceding claims, wherein the mixture (M) is co-coagulated in step (iii) by an addition of electrolyte, by an addition of water miscible solvents, by rapid stirring, or by freezing treatment to the mixture (M).

**12.** The process according to any of the preceding claims, wherein the composition obtained in step (iii) is rinsed by water and subsequently dried by vacuum drying.

**13.** The process according to any of the preceding claims, further comprising a step of melt processing the composition to obtain a film, a coating, or a lining.

**14.** The process according to claim 1, wherein said at least one fluorinated monomer is selected from the group consisting of:

- $C_2$-$C_8$ fluoro- and/or perfluoroolefins;
- $C_2$-$C_8$ hydrogenated monofluoroolefins;
- (per)fluoroalkylethylenes complying with formula $CH_2$=CH-$R_{f0}$, in which $R_{f0}$ is a $C_1$-$C_6$ (per)fluoroalkyl or a $C_1$-$C_6$ (per)fluorooxyalkyl having one or more ether groups ;
- chloro- and/or bromo- and/or iodo-$C_2$-$C_6$ fluoroolefins;

- fluoroalkylvinylethers complying with formula $CF_2=CFOR_{f1}$ in which $R_{f1}$ is a $C_1$-$C_6$ fluoro- or perfluoroalkyl;
- hydrofluoroalkylvinylethers complying with formula $CH_2=CFOR_{f1}$ in which $R_{f1}$ is a $C_1$-$C_6$ fluoro- or perfluoroalkyl;
- fluoro-oxyalkylvinylethers complying with formula $CF_2=CFOX_0$, in which $X_0$ is a $C_1$-$C_{12}$ oxyalkyl, or a $C_1$-$C_{12}$ (per)fluorooxyalkyl having one or more ether groups;
- fluoroalkyl-methoxy-vinylethers complying with formula $CF_2=CFOCF_2OR_{f2}$ in which $R_{f2}$ is a $C_1$-$C_6$ fluoro- or perfluoroalkyl, or a $C_1$-$C_6$ (per)fluorooxyalkyl having one or more ether groups;
- functional fluoro-alkylvinylethers complying with formula $CF_2=CFOY_0$, in which Yo is a $C_1$-$C_{12}$ alkyl or (per)fluoroalkyl, or a $C_1$-$C_{12}$ oxyalkyl or a $C_1$-$C_{12}$ (per)fluorooxyalkyl, said Yo group comprising a carboxylic or sulfonic acid group, in its acid, acid halide or salt form;
- fluorodioxoles, of formula :

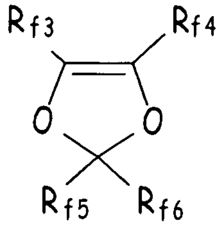

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom.

**15.** The process according to claim 14, wherein said polymer is a hydrogen-containing fluoropolymer selected from a group consisting of:

(A-1) TFE and/or CTFE copolymers with ethylene, propylene or isobutylene, with a molar ratio per(halo)fluoromonomer(s)/hydrogenated comonomer(s) of from 30:70 to 70:30, optionally containing one or more comonomers in amounts of from 0.1 to 30 % by moles, based on the total amount of TFE and/or CTFE and hydrogenated comonomer(s);
(A-2) Vinylidene fluoride (VdF) polymers, optionally comprising reduced amounts, generally comprised between 0.1 and 15 % by moles, of one or more fluorinated comonomer(s), and optionally further comprising one or more hydrogenated comonomer(s); and

mixtures thereof.

## Patentansprüche

**1.** Verfahren zur Herstellung einer Zusammensetzung, die Graphen und mindestens ein Polymer umfasst, wobei das Verfahren folgende Schritte umfasst :

(i) Bereitstellen einer wässrigen Suspension von Graphen [Dispersion (G)];
(ii) Mischen der Dispersion (G) mit einem wässrigen Polymerlatex zum Erhalt einer flüssigen Mischung [Mischung (M)] und
(iii) Cokoagulieren der Mischung (M) zum Erhalt der Zusammensetzung, wobei es sich bei dem Polymer um ein Fluorpolymer, das von mindestens einem fluorierten Monomer abgeleitete Wiederholungseinheiten umfasst, handelt.

**2.** Verfahren nach Anspruch 1, bei dem es sich bei dem Polymer um ein Per(halogen)fluorpolymer handelt, was sich auf ein Fluorpolymer bezieht, das weitgehend frei von Wasserstoffatomen ist und gegebenenfalls ein oder mehrere von Fluor verschiedene Halogenatome umfasst.

**3.** Verfahren nach Anspruch 1 oder 2, bei dem es sich bei der in Schritt (i) bereitgestellten wässrigen Suspension von Graphen um eine wässrige Suspension von Graphenoxid handelt und das Graphenoxid einen Sauerstoffgehalt zwischen 1 und 90 Gew.- % aufweist.

**4.** Verfahren nach Anspruch 3, bei dem das Graphenoxid einen Sauerstoffgehalt zwischen 30 und 60 Gew.- % aufweist.

**5.** Verfahren nach einem der vorhergehenden Ansprüche, das ferner den Schritt des Erhitzens der in Schritt (iii) erhaltenen Zusammensetzung enthält, wobei die Erhitzungstemperatur über 250°C liegt.

**6.** Verfahren nach einem der vorhergehenden Ansprüche, bei dem Schritt (i) das Beschallen einer wässrigen Suspension von Graphitoxid zum Erhalt einer wässrigen Suspension von Graphenoxid umfasst.

**7.** Verfahren nach einem der vorhergehenden Ansprüche, bei dem Schritt (i) die folgenden Schritte enthält :

(i-a) Mischen von Graphit mit konzentrierter Schwefelsäure, wobei es sich bei der konzentrierten Schwefelsäure um eine Lösung von $H_2SO_4$ in Wasser mit einer Konzentration von mindestens 80 Gew.- % handelt;
(i-b) Eintragen mindestens eines Oxidationsmittels in die in (i-a) erhaltene Mischung zum Erhalt von überoxygenierten Graphitsalzen;
(i-c) Zugeben von Wasser zu den überoxygenierten Graphitsalzen in Schritt (i-b) zum Erhalt einer ersten Graphitoxidsuspension [S1];
(i-d) Entfernen von Metall- und Nichtmetallionen aus der ersten Graphitoxidsuspension [S1] zum Erhalt einer zweiten Graphitoxidsuspension [S2] und
(i-e) Beschallen der zweiten Graphitoxidsuspension [S2] oder alternativ dazu Rühren der Graphitoxid/Wasser-Mischung in der Suspension [S2] zum Erhalt einer wässrigen Suspension von Graphenoxid.

**8.** Verfahren nach Anspruch 7, **dadurch gekennzeichnet, dass** vor Schritt (i-d) eine Menge von Wasserstoffperoxid zu der mit Wasser verdünnten Graphitoxidsuspension [S1] gegeben wird, um das restliche Permanganat und Mangandioxid in der Suspension [S1] zu Mangansulfat zu reduzieren, wobei die Menge von Wasserstoffperoxid zu dem in Schritt (i-a) verwendeten Graphit im Bereich von 1,5:1 bis 10:1, bezogen auf das Gewicht, liegt.

**9.** Verfahren nach Anspruch 3, bei dem die in Schritt (i) bereitgestellte wässrige Suspension von Graphenoxid durch eine Methode hergestellt wird, die die folgenden Schritte umfasst :

(i-A) Dispergieren von Graphitoxid mit einem Sauerstoffgehalt zwischen 5 % und 30 % in einer wässrigen Lösung von Schwefelsäure mit einer $H_2SO_4$-Konzentration zwischen 10 Gew.- % und 96 Gew.- % durch Beschallen zum Erhalt einer ersten Graphenoxiddispersion (D1) mit einem pH-Wert im Bereich von 2 bis 5;
(i-B) Zugeben einer Menge von Wasserstoffperoxid zu der ersten Graphenoxiddispersion (D1), gegebenenfalls unter Beschallen, zur Bereitstellung einer zweiten Dispersion (D2), wobei das Gewichtsverhältnis von in (i-A) dispergiertem Graphitoxid zu der Menge von Wasserstoffperoxid zwischen 1:10 und 1:50 liegt;
(i-C) Zugeben eines löslichen Fe(II)-Salzes zu der zweiten Dispersion (D2) zum Erhalt einer dritten Dispersion (D3), wobei das Gewichtsverhältnis des in (i-C) zugegebenen Fe(II)-Salzes zu dem in (i-B) zugegebenen Wasserstoffperoxid zwischen 1:10 und 1:100 liegt;
(i-D) gegebenenfalls Neutralisieren der dritten Dispersion (D3) mit einer Base zum Erreichen eines pH-Werts von 6,0-8,0 und
(i-E) Entfernen von Fe(III) und gegebenenfalls anderen Verunreinigungen zum Erhalt einer weitgehend eisenfreien oxidierten Suspension von Graphenoxid.

**10.** Verfahren nach Anspruch 6, **dadurch gekennzeichnet, dass** die in Schritt (i) erhaltene wässrige Suspension von Graphenoxid ferner durch Zentrifugieren gereinigt wird, um eine kleine Menge von Aggregaten, die unter der Zentrifugalkraft ausfallen, zu entfernen, wodurch man eine kolloidale Suspension von Graphenoxid-Plättchen aus dem verbliebenen Überstand erhält.

**11.** Verfahren nach einem der vorhergehenden Ansprüche, bei dem die Cokoagulation der Mischung (M) in Schritt (iii) durch eine Zugabe von Elektrolyt, durch eine Zugabe von wassermischbaren Lösungsmitteln, durch schnelles Rühren oder durch Einfrierbehandlung (zu) der Mischung (M) erfolgt.

**12.** Verfahren nach einem der vorhergehenden Ansprüche, bei dem die in Schritt (iii) erhaltene Zusammensetzung mit Wasser gewaschen und anschließend durch Vakuumtrocknung getrocknet wird.

**13.** Verfahren nach einem der vorhergehenden Ansprüche, ferner umfassend einen Schritt der Schmelzeverarbeitung der Zusammensetzung zum Erhalt eines Films, einer Beschichtung oder einer Auskleidung.

**14.** Verfahren nach Anspruch 1, bei dem das mindestens eine fluorierte Monomer ausgewählt ist aus der Gruppe bestehend aus :

- $C_2$-$C_8$-Fluor- und/oder -Perfluorolefinen;
- hydrierten $C_2$-$C_8$-Monofluorolefinen;
- (Per)fluoralkylethylenen der Formel $CH_2$=CH-$R_{f0}$, worin $R_{f0}$ für ein $C_1$-$C_6$-(Per)fluoralkyl oder ein $C_1$-$C_6$-(Per)fluoroxyalkyl mit einer oder mehreren Ethergruppen steht;
- Chlor- und/oder Brom- und/oder Iod-$C_2$-$C_6$-fluorolefinen;
- Fluoralkylvinylethern der Formel $CF_2$=$CFOR_{f1}$, worin $R_{f1}$ für ein $C_1$-$C_6$-Fluor- oder -Perfluoralkyl steht;
- Hydrofluoralkylvinylethern der Formel $CH_2$=$CFOR_{f1}$, worin $R_{f1}$ für ein $C_1$-$C_6$-Fluor- oder -Perfluoralkyl steht;
- Fluoroxyalkylvinylethern der Formel $CF_2$=$CFOX_0$, worin $X_0$ für ein $C_1$-$C_{12}$-Oxyalkyl oder ein $C_1$-$C_{12}$-(Per)fluoroxyalkyl mit einer oder mehreren Ethergruppen steht;
- Fluoralkylmethoxyvinylethern der Formel $CF_2$=$CFOCF_2OR_{f2}$, worin $R_{f2}$ für ein $C_1$-$C_6$-Fluor- oder -Perfluoralkyl oder ein $C_1$-$C_6$-(Per)fluoroxyalkyl mit einer oder mehreren Ethergruppen steht;
- funktionellen Fluoralkylvinylethern der Formel $CF_2$=$CFOY_0$, worin $Y_0$ für ein $C_1$-$C_{12}$-Alkyl oder -(Per)fluoralkyl oder ein $C_1$-$C_{12}$-Oxyalkyl oder ein $C_1$-$C_{12}$-(Per)fluoroxyalkyl steht, wobei die Gruppe $Y_0$ eine Carbon- oder Sulfonsäuregruppe in ihrer Säure-, Säurehalogenid- oder Salzform umfasst;
- Fluordioxolen der Formel :

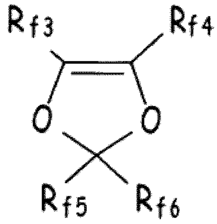

worin $R_{f3}$, $R_{f4}$, $R_{f5}$ und $R_{f6}$ jeweils gleich oder voneinander verschieden sind und unabhängig voneinander für ein Fluoratom, eine $C_1$-$C_6$-Fluor- oder -Per(halogen)fluoralkylgruppe, die gegebenenfalls ein oder mehrere Sauerstoffatome enthält, stehen.

**15.** Verfahren nach Anspruch 14, wobei es sich bei dem Polymer um ein wasserstoffhaltiges Fluorpolymer handelt, das ausgewählt ist aus der Gruppe bestehend aus :

(A-1)TFE- und/oder CTFE-Copolymeren mit Ethylen, Propylen oder Isobutylen mit einem Molverhältnis von Per(halogen)fluormonomer(en) zu hydriertem Comonomer bzw. hydrierten Comonomeren von 30:70 bis 70:30, gegebenenfalls mit einem oder mehreren Comonomeren in Mengen von 0,1 bis 30 Mol- %, bezogen auf die Gesamtmenge von TFE und/oder CTFE und hydriertem Comonomer bzw. hydrierten Comonomeren;
(A-2) Vinylidenfluorid(VdF)-Polymeren, gegebenenfalls mit reduzierten Mengen, im Allgemeinen zwischen 0,1 und 15 Mol- %, eines oder mehrerer fluorierter Comonomere und gegebenenfalls ferner mit einem oder mehreren hydrierten Comonomeren; und

Mischungen davon.

## Revendications

**1.** Procédé de production d'une composition comprenant du graphène et au moins un polymère, le procédé comprenant les étapes consistant à :

(i) obtenir une suspension aqueuse de graphène [dispersion (G)] ;
(ii) mélanger la dispersion (G) avec un latex polymère aqueux pour obtenir un mélange liquide [mélange (M)] ; et
(iii) co-coaguler le mélange (M) pour obtenir ladite composition, le polymère étant un fluoropolymère qui comprend des motifs récurrents dérivés d'au moins un monomère fluoré.

**2.** Procédé selon la revendication 1, dans lequel le polymère est un per(halogéno)fluoropolymère, qui fait référence à un fluoropolymère sensiblement dépourvu d'atomes d'hydrogène et comprend optionnellement un ou plusieurs atomes d'halogène différents du fluor.

**3.** Procédé selon la revendication 1 ou 2, dans lequel la suspension aqueuse de graphène obtenue à l'étape (i) est une suspension aqueuse d'oxyde de graphène, et dans lequel l'oxyde de graphène a une teneur en oxygène comprise entre 1 % et 90 % en poids.

**4.** Procédé selon la revendication 3, dans lequel l'oxyde de graphène a une teneur en oxygène comprise entre 30 % et 60 % en poids.

**5.** Procédé selon l'une quelconque des revendications précédentes, comportant en outre l'étape de chauffage de la composition obtenue à l'étape (iii), la température de chauffage étant supérieure à 250°C.

**6.** Procédé selon l'une quelconque des revendications précédentes, dans lequel l'étape (i) comprend la soumission d'une suspension aqueuse d'oxyde de graphite à un traitement par ultrasons, pour obtenir une suspension aqueuse d'oxyde de graphène.

**7.** Procédé selon l'une quelconque des revendications précédentes, dans lequel l'étape (i) comporte les étapes suivantes :

(i-a) mélanger du graphite avec de l'acide sulfurique concentré, l'acide sulfurique concentré étant une solution aqueuse de $H_2SO_4$ ayant une concentration d'au moins 80 % en poids ;
(i-b) introduire au moins un oxydant dans le mélange obtenu en (i-a) pour obtenir des sels de graphite suroxygénés ;
(i-c) ajouter de l'eau aux sels de graphite suroxygénés de l'étape (i-b) pour obtenir une première suspension d'oxyde de graphite [S1] ;
(i-d) retirer les ions métalliques et non métalliques de la première suspension d'oxyde de graphite [S1] pour obtenir une deuxième suspension d'oxyde de graphite [S2] ; et
(i-e) soumettre la deuxième suspension d'oxyde de graphite [S2] à un traitement par ultrasons ou, sinon, agiter le mélange oxyde de graphite/eau dans la suspension [S2], pour obtenir une suspension aqueuse d'oxyde de graphène.

**8.** Procédé selon la revendication 7, **caractérisé en ce qu'**une quantité de peroxyde d'hydrogène est ajoutée à la suspension d'oxyde de graphite diluée à l'eau [S1], avant l'étape (i-d), pour réduire le permanganate et le dioxyde de manganèse résiduels en sulfate de manganèse dans la suspension [S1], la quantité de peroxyde d'hydrogène par rapport au graphite utilisé à l'étape (i-a) allant de 1,5:1 à 10:1 en poids.

**9.** Procédé selon la revendication 3, dans lequel la suspension aqueuse d'oxyde de graphène obtenue à l'étape (i) est fabriquée par un procédé comprenant les étapes suivantes :

(i-A) disperser de l'oxyde de graphite ayant une teneur en oxygène comprise entre 5 % et 30 % dans une solution aqueuse d'acide sulfurique ayant une concentration de $H_2SO_4$ comprise entre 10 % en poids et 96 % en poids, par traitement par ultrasons, de manière à obtenir une première dispersion d'oxyde de graphène (D1) avec un pH dans la gamme de 2 à 5 ;
(i-B) ajouter une quantité de peroxyde d'hydrogène à la première dispersion d'oxyde de graphène (D1), optionnellement sous traitement par ultrasons, pour obtenir une deuxième dispersion (D2), le rapport pondéral de l'oxyde de graphite dispersé en (i-A) à la quantité de peroxyde d'hydrogène se situant entre 1:10 et 1:50 ;
(i-C) ajouter à la deuxième dispersion (D2) un sel de Fe (II) soluble pour obtenir une troisième dispersion (D3), le rapport pondéral du sel de Fe (II) ajouté en (i-C) au peroxyde d'hydrogène ajouté en (i-B) se situant entre 1:10 et 1:100 ;
(i-D) optionnellement, neutraliser ladite troisième dispersion (D3) avec une base pour atteindre un pH de 6,0-8,0 ; et

(i-E) retirer le Fe (III) et éventuellement d'autres impuretés pour obtenir une suspension oxydée d'oxyde de graphène essentiellement dépourvue de fer.

**10.** Procédé selon la revendication 6, **caractérisé en ce que** la suspension aqueuse d'oxyde de graphène obtenue à l'étape (i) est en outre purifiée par centrifugation, pour retirer une petite quantité d'agrégats qui précipitent sous la force centrifuge, de manière à obtenir une suspension colloïdale de plaquettes d'oxyde de graphène à partir du surnageant restant.

**11.** Procédé selon l'une quelconque des revendications précédentes, dans lequel le mélange (M) est co-coagulé à l'étape (iii) par une addition d'électrolyte, par une addition de solvants miscibles à l'eau, par agitation rapide, ou par traitement de congélation du mélange (M).

**12.** Procédé selon l'une quelconque des revendications précédentes, dans lequel la composition obtenue à l'étape (iii) est rincée à l'eau et ensuite séchée par séchage sous vide.

**13.** Procédé selon l'une quelconque des revendications précédentes, comprenant en outre une étape de traitement à l'état fondu de la composition pour obtenir un film, un revêtement, ou un revêtement intérieur.

**14.** Procédé selon la revendication 1, dans lequel ledit au moins un monomère fluoré est choisi dans le groupe constitué par :

- les fluoro- et/ou perfluorooléfines en $C_2$-$C_8$ ;
- les monofluorooléfines hydrogénées en $C_2$-$C_8$ ;
- les (per)fluoroalkyléthylènes répondant à la formule $CH_2$=CH-$R_{f0}$, dans laquelle $R_{f0}$ est un (per)fluoroalkyle en $C_1$-$C_6$ ou un (per)fluorooxyalkyle en $C_1$-$C_6$ ayant un ou plusieurs groupes éther ;
- les chloro- et/ou bromo- et/ou iodo-fluorooléfines en $C_2$-$C_6$ ;
- les éthers fluoroalkylvinyliques répondant à la formule $CF_2$=$CFOR_{f1}$ dans laquelle $R_{f1}$ est un fluoro- ou perfluoroalkyle en $C_1$-$C_6$ ;
- les éthers hydrofluoroalkylvinyliques répondant à la formule $CH_2$=$CFOR_{f1}$ dans laquelle $R_{f1}$ est un fluoro- ou perfluoroalkyle en $C_1$-$C_6$ ;
- les éthers fluoro-oxyalkylvinyliques répondant à la formule $CF_2$=$CFOX_0$, dans laquelle $X_0$ est un oxyalkyle en $C_1$-$C_{12}$, ou un (per)fluorooxyalkyle en $C_1$-$C_{12}$ ayant un ou plusieurs groupes éther ;
- les éthers fluoroalkyl-méthoxy-vinyliques répondant à la formule $CF_2$=$CFOCF_2OR_{f2}$ dans laquelle $R_{f2}$ est un fluoro- ou perfluoroalkyle en $C_1$-$C_6$, ou un (per)fluorooxyalkyle en $C_1$-$C_6$ ayant un ou plusieurs groupes éther ;
- les éthers fluoro-alkylvinyliques fonctionnels répondant à la formule $CF_2$=$CFOY_0$, dans laquelle $Y_0$ est un alkyle ou (per)fluoroalkyle en $C_1$-$C_{12}$, ou un oxyalkyle en $C_1$-$C_{12}$ ou un (per)fluorooxyalkyle en $C_1$-$C_{12}$, ledit groupe $Y_0$ comprenant un groupement acide carboxylique ou sulfonique, sous sa forme acide, d'halogénure d'acide ou de sel ;
- les fluorodioxoles, de formule :

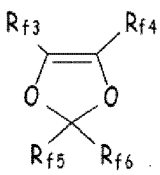

dans laquelle chacun des $R_{f3}$, $R_{f4}$, $R_{f5}$, $R_{f6}$, identiques ou différents les uns des autres, représente indépendamment un atome de fluor, un fluoro- ou per(halogéno)fluoroalkyle en $C_1$-$C_6$, comprenant optionnellement un ou plusieurs atomes d'oxygène.

**15.** Procédé selon la revendication 14, dans lequel ledit polymère est un fluoropolymère contenant de l'hydrogène choisi

dans un groupe constitué par :

(A-1)les copolymères de TFE et/ou CTFE avec l'éthylène, le propylène ou l'isobutylène, avec un rapport molaire monomère(s) per(halogéno)fluoré(s)/comonomère(s) hydrogéné(s) de 30:70 à 70:30, contenant optionnellement un ou plusieurs comonomères dans des quantités de 0,1 à 30 % en moles, rapporté à la quantité totale de TFE et/ou CTFE et de comonomère(s) hydrogéné(s) ;
(A-2) les polymères de fluorure de vinylidène (VdF), comprenant optionnellement des quantités réduites, généralement comprises entre 0,1 et 15 % en moles, d'un ou plusieurs comonomère(s) fluoré(s), et comprenant aussi optionnellement un ou plusieurs comonomère(s) hydrogéné(s) ; et

les mélanges de ceux-ci.

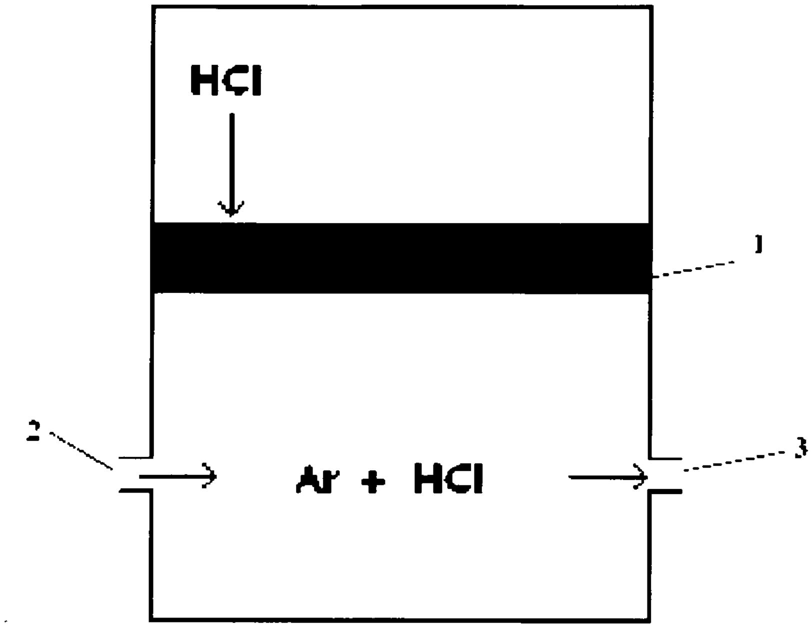


Fig. 1

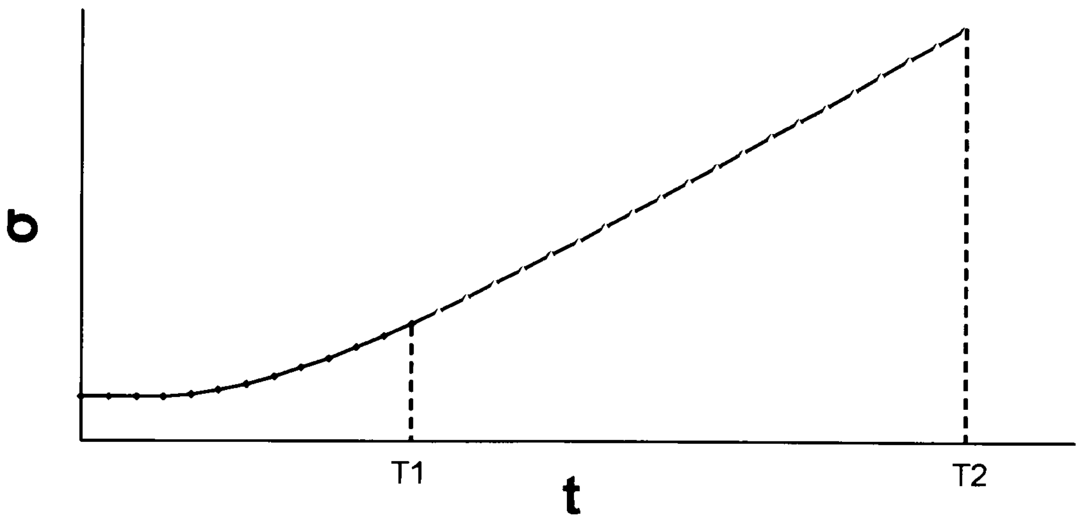


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 12157175 A
- US 20100096595 A
- US 20100096597 A
- US 20110114189 A
- US 4029868 A, DU PONT
- US 5677404 A, DU PONT
- US 5703185 A, DU PONT
- US 5688885 A, DU PONT
- US 3624250 A
- US 4513129 A
- US 4524194 A
- US 4739024 A
- US 5597880 A